(19) Europäisches Patentamt
European Patent Office
Office européen des brevets

(11) Veröffentlichungsnummer : **0 073 038**
**B1**

(12) # EUROPÄISCHE PATENTSCHRIFT

(45) Veröffentlichungstag der Patentschrift : **02.01.86**

(21) Anmeldenummer : **82107645.2**

(22) Anmeldetag : **20.08.82**

(51) Int. Cl.⁴ : **C 08 K 5/00**, C 08 K 5/23, C 08 J 9/10

(54) **Verfahren zum Vernetzen und gegebenenfalls Verschäumen von natürlichen oder synthetischen Homo- und/oder Copolymeren.**

(30) Priorität : **21.08.81 DE 3133173**

(43) Veröffentlichungstag der Anmeldung : **02.03.83 Patentblatt 83/09**

(45) Bekanntmachung des Hinweises auf die Patenterteilung : **02.01.86 Patentblatt 86/01**

(84) Benannte Vertragsstaaten : **DE FR GB IT NL SE**

(56) Entgegenhaltungen :
**FR-A- 2 403 356**
**US-A- 3 776 885**
**US-A- 3 840 619**
**US-A- 3 852 177**
**US-A- 3 923 621**
**US-A- 4 031 167**
**US-A- 4 129 531**

(73) Patentinhaber : **Luperox GmbH**
**Wasserburg Denzinger Strasse 7**
**D-8870 Günzburg (DE)**

(72) Erfinder : **Rauer, Kurt, Dr.**
**Immelmannstrasse 8**
**D-8870 Günzburg (DE)**
Erfinder : **Hofmann, Harald**
**Rothenhofstrasse 11**
**D-8871 Ellzee/Stoffenried (DE)**

(74) Vertreter : **Abitz, Walter, Dr.-Ing. et al**
**Abitz, Morf, Gritschneder, Freiherr von Wittgenstein**
**Postfach 86 01 09**
**D-8000 München 86 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 073 038 B1

**Beschreibung**

In DE-A-27 48 833 und FR-A-7 826 692 sind die Vernetzung und Verschäumung von Polymeren mittels Azoestern beschrieben ; die US-PS 3 776 885 betrifft die Vernetzung von Polymeren mit Azoäthern.

Im Rahmen der Erfindung wurde gefunden, dass Kombinationen aus kleineren Mengen von Azoestern (z. B. der nachfolgenden Formel I) oder Azoäthern (z. B. der nachfolgenden Formel II)

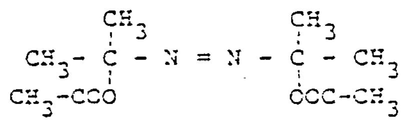

(I)

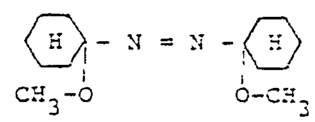

(II)

mit Vernetzungsverstärkern (z. B. Triallylcyanurat, Triallyltrimellitat) zum Vernetzen von Polymeren hervorragend geeignet sind und gegenüber alleiniger Verwendung von grösseren Mengen an Azoestern oder Azoäthern, also in Abwesenheit von Vernetzungsverstärken, beachtliche im folgenden aufgeführte Vorteile ergeben.

Gegenstand der Erfindung ist somit ein Verfahren zum Vernetzen und gegebenenfalls Verschäumen von natürlichen oder synthetischen Homo- oder Copolymeren mit $-CH_2-$ und/oder $-\underset{|}{C}H$-Gruppen sowie von Mischungen aus zwei oder mehreren dieser Homo- und/oder Copolymeren unter Verwendung von Azoestern und/oder Azoäthern der allgemeinen Formel III und/oder IV

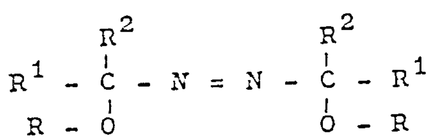

(III)

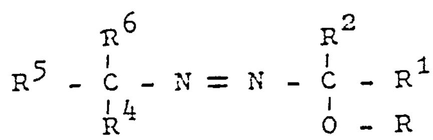

(IV)

worin bedeuten

R = $C_{1-11}$-Alkyl, $C_{5-6}$-Cycloalkyl, Phenyl, Phenyl-$C_{1-10}$-alkyl oder $R^3$—CO—($R^3$ = H, $C_{1-10}$-Alkyl, $C_{5-6}$-Cycloalkyl, Phenyl, Phenyl-$C_{1-10}$-alkyl), wobei diese Reste Methylgruppen oder $C_{2-10}$-Alkylketten als Substituenten enthalten können ;

$R^1$ und $R^2$, die gleich oder verschieden sein können, = $C_{1-10}$-Alkyl, $C_{5-6}$-Cycloalkyl, Phenyl, Phenyl-$C_{1-10}$-alkyl, wobei diese Reste Methyl- oder $C_{2-10}$-Alkylketten als Substituenten enthalten können ;

$R^1R^2C$ zusammen = $C_{5-6}$-Cycloalkyl, der Methyl- oder $C_{2-10}$-Alkylsubstituenten enthalten kann ;

$RR^1$ miteinander = $-CO-CH_2-CH_2-$ oder $-CO-CH_2-CH_2-CH_2-$, die Methyl- oder $C_{2-10}$-Alkylsubstituenten enthalten können ;

$R^4$ und $R^5$ und $R^6$, die gleich oder verschieden sein können, = $CH_3$, $C_{2-10}$-Alkyl, $C_{5-6}$-Cycloalkyl, Phenyl, Phenyl-$C_{1-10}$-alkyl, wobei diese Reste Methyl- oder $C_{2-10}$-Alkylketten als Substituenten enthalten können ;

$R^5R^6C$ zusammen = $C_{5-6}$-Cycloalkyl, der Methyl- oder $C_{2-10}$-Alkylsubstituenten enthalten kann,

wobei die Reste R, $R^1$, $R^2$, $R^3$, $R^1R^2C$ und $RR^1$ in der allgemeinen Formel III auf der linken und rechten Seite des Moleküls gleich oder verschieden sein können, als radikalbildende Vernetzungsmittel, unter Unterdruck, Atmosphärendruck oder Überdruck, das dadurch gekennzeichnet ist, dass die Vernetzung mit insgesamt 0,02 bis 1,5 Gewichts-% der Azoester und/oder Azoäther in Kombination mit insgesamt 0,05 bis 10 Gewichts-% eines oder mehrerer Vernetzungsverstärker mit mindestens zwei reaktionsfähigen (polymerisierbaren) C-C-Doppel- oder C-C-Dreifachbindungen im Molekül bei Temperaturen von oberhalb 150 °C bis zur oberen Grenze der thermischen Belastbarkeit der zu vernetzenden Homo- und/oder Copolymeren durchgeführt wird, wobei sich die Prozentangaben auf das Gewicht des Homo- und/oder Copolymeren beziehen.

1. Es ist eine wesentliche Verringerung der Menge an Azoester oder Azoäther zur Erzielung eines Vernetzungsgrades möglich, der mittels Azoester oder Azoäther allein nur unter Anwendung einer erheblich größeren Menge dieser Azoverbindungen erzielbar ist. So wurde beispielsweise bei der Vernetzung von Polyäthylen mittels einer Kombination von 0,6 % Azoester (I) und 0,3 % Triallylcyanurat ein Vernetzungsgrad von 74 % erzielt, wohingegen große Mengen, wie 1,5 %, 2 %, 3 %, 4 % bzw. 5 % des Azoesters (I) Vernetzungsgrade von nur 71 %, 76 %, 80 %, 81 % bzw. 82 % ergeben.

Es ist sogar möglich, die Menge an Azoverbindung unter 0,1 %, z. B. auf 0,05 % oder 0,02 %, zu senken und trotzdem gute Vernetzungsgrade zu erzielen. So wurde beispielsweise Polyäthylen bei 200 °C mit der

Kombination von 0,5 % Triallylcyanurat und 0,05 % 2,2'-Azo-bis-(2-acetoxy-4-methylpentan) zu 81 % vernetzt.

2. Die erfindungsgemäße Kombination aus Azovernetzer und Vernetzungsverstärker kann sogar die Möglichkeit ergeben, einen guten Vernetzungsgrad zu erzielen, wenn der Azovernetzer allein gar keine Vernetzung bewirkt. So läßt sich Äthylen-Propylen-Copolymer (= EPR, gesättigter Typ) mittels einer Kombination aus 1,5 % Azoester (I) und 0,7 % Triallylcyanurat als Vernetzungsverstärker zu 78 % vernetzen, wogegen mit dem Azoester allein überhaupt keine Vernetzung zu erzielen war. 1,5 % Azoester I allein ergaben nämlich einen Vernetzungsgrad von nur 0,7 % und 5 % I ergaben einen Vernetzungsgrad von nur 1,5 %. Bei Anwendung einer Kombination aus 1,5 % Azoester I und 0,7 % Triallylcyanurat wurde jedoch der gute Vernetzungsgrad von 78 % erzielt.

3. Die erfindungsgemäße Kombination aus Azoverbindung und Vernetzungsverstärker erlaubt eine Vernetzung von Polypropylen. Beispielsweise konnten 5 % Triallyltrimellitat und 1 % 2,2'-Azo-bis-(2-acetoxy-4-methylpentan) Polypropylen bei 200 °C zu 67 % und bei 180 °C zu 78 % vernetzen, wogegen Azoverbindungen allein einen Abbau (Degradation) des Polypropylens bewirken.

4. Ein weiterer Vorteil des erfindungsgemäßen System gegenüber der alleinigen Verwendung von Azoestern oder Azoäthern liegt in der « Kicker »-Wirkung der Vernetzungsverstärker, welche die Anspringtemperatur um etwa 20 °C senkt.

5. Durch das erfindungsgemäße System ist es möglich, unter drucklosen oder fast drucklosen (unter 5 bar) Bedingungen unverschäumte, blasenfreie Polymerformstücke (z. B. Rohre) mit gutem Vernetzungsgrad zu erhalten. Besonders günstige Ergebnisse werden hier erzielt, wenn Azoester oder Azoäther in der erfindungsgemäßen Kombination in sehr kleinen Mengen angewandt werden (etwa 0,02 bis 0,2 %).

6. Gegenüber peroxidischen Vernetzungsmitteln bietet die erfindungsgemäße Kombination den Vorteil, daß das Vermischen mit dem Polymeren bei höheren Temperaturen ohne vorzeitiges Annetzen (scorching) möglich ist, was bei Polymeren mit hohem Erweichungspunkt, z. B. Polyäthylen hoher Dichte oder Polypropylen, besonders wichtig ist.

Die erfindungsgemässe Vernetzung wird bei Temperaturen oberhalb 150 °C ausgeführt, wobei die obere Grenze von der thermischen Belastbarkeit des Polymeren abhängt.

Die Verschäumungsfähigkeit der beim thermischen Zerfall molare Mengen Stickstoff entwickelnden Azoester oder Azoäther bleibt auch bei Mitverwendung von Vernetzungsverstärkern erhalten. Wird die Vernetzung gemäß der Erfindung unter Anwendung von Druck ausgeführt, tritt keine Verschäumung auf. Bei Verwendung kleiner Mengen Azoverbindung (etwa unter 0,2 %) ermöglicht die Mitverwendung von Vernetzungsverstärkern auch unter drucklosen Bedingungen eine blasenfreie Vernetzung, wie vorstehend ausgeführt wurde.

Die als Vernetzungsmittel wirkenden symmetrischen oder unsymmetrischen Azoester oder Azoäther werden einzeln oder in Kombination miteinander in Mengen von insgesamt 0,02 bis 1,5 Gewichts-%, bevorzugt 0,1 bis 0,8 Gewichts-%, besonders bevorzugt 0,4 bis 0,8 Gewichts-%, bezogen auf das zu vernetzende Polymere, eingesetzt. Im Falle der Vernetzung von Polypropylen liegt ein besonders bevorzugter Bereich für die einzusetzenden Azoester oder Azoäther bei insgesamt 0,4 bis 1,5 Gewichts-%, bezogen auf das zu vernetzende Polymere.

Es ist auch möglich, eine oder mehrere der erfindungsgemäß verwendeten Azoverbindungen mit einem oder mehreren anderen vernetzend wirkenden Radikalbildnern, wie organischen Peroxiden mit Ausnahme von Hydroperoxiden und Persäuren, Aziden und Diazoacetaten, zu kombinieren, wobei die Gesamtmengen der Vernetzerkombinationen in den vorstehend genannten Bereichen liegen.

Es ist auch möglich, die erfindungsgemäß eingesetzten Azoverbindungen selbst oder deren Kombinationen mit einem oder mehreren anderen Radikalbildnern gemeinsam mit Verschäumungsmitteln (z. B. Azodicarbonamid, Azibisisobutyronitril) anzuwenden.

Die Mengen an Vernetzungsverstärker, die einzeln oder in Kombination miteinander angewandt werden, liegen im Bereich von insgesamt 0,05 bis 10 Gewichts-%, vorzugsweise von 0,1 bis 5 Gewichts-% und besonders bevorzugt von 0,2 bis 2 Gewichts-%, bezogen auf das zu vernetzende Polymere. Im Falle der Vernetzung von Polypropylen sind 2 bis 10 Gewichts-% Vernetzungsverstärker, bezogen auf das zu vernetzende Polypropylen, bevorzugt.

Das Verhältnis der Mengen an Vernetzungsverstärker oder deren Kombinationen miteinander zu den Mengen an Azoverbindung oder deren Kombinationen mit anderen Radikalbildnern kann jeden Wert annehmen. Bevorzugt sind Gewichtsverhältnisse von Vernetzungsverstärker zu Azoverbindung von 0,5 bis 2 : 1, insbesondere bevorzugt etwa 1 : 1. Bei derartigen Verhältnissen wird der höchste Vernetzungsgrad bei gleichzeitiger starker Verminderung der Mengen an Vernetzungsmittel und Vernetzungsverstärker ermöglicht. Bei der Vernetzung von Polypropylen liegt ein bevorzugtes Gewichtsverhältnis von Vernetzungsverstärker zu Azoverbindung von 0,5 bis 2 : 1, insbesondere bevorzugt etwa 1 : 1. Bei derartigen Verhältnissen wird der höchste Vernetzungsgrad bei gleichzeitiger starker Verminderung der Mengen an Vernetzungsmittel und Vernetzungsverstärker ermöglicht. Bei der Vernetzung von Polypropylen liegt ein bevorzugtes Gewichtsverhältnis von Vernetzungsverstärker zu Azoverbindung bei etwa 5 bis 10 : 1.

Die Summe von Vernetzungsverstärker und Azoverbindung ist nicht kritisch. Sie beträgt im

allgemeinen mindestens 0,4 Gewichts-%, bezogen auf das zu vernetzende Polymere, bevorzugt sind 0,5 bis 1,5 oder 0,5 bis 2 Gewichts-%. Bei der Vernetzung von Polypropylen beträgt die Summe von Vernetzungsverstärker und Azoverbindung vorzugsweise mindestens 2,4 und besonders bevorzugt 4 bis 7 Gewichts-%.

Es versteht sich, daß anstelle eines einzelnen Vernetzungsverstärkers auch beliebige Gemische von zwei oder mehreren Vernetzungsverstärkern eingesetzt werden können.

In der allgemeinen Formel III sind die Reste R, $R^1$, $R^2$, $R^3$, $R^1R^2C$ und $RR^1$ auf der linken Seite des Moleküls in der Regel identisch mit den entsprechenden Resten auf der rechten Seite des Moleküls, sie können aber auch verschieden sein, wobei entweder nur ein Rest oder auch mehrere Reste verschieden sind. Es ist also auch möglich, daß R—O— auf der linken Seite einen Ätherrest und auf der rechten Seite einen Esterrest ($R^3$—COO—) darstellt und somit ein gemischter Azoester-äther vorliegt.

Bevorzugte Alkylsubstituenten an den vorstehenden Gruppen R, $R^1$, $R^2$, $R^3$, $R^4$, $R^5$ und $R^6$ sind : $C_{1-6}$-Alkyl, ganz besonders Methyl, Äthyl und Propyl.

Beispiele für bevorzugte Reste R, $R^1$, $R^2$, $R^3$, $R^4$, $R^5$, $R^6$ sind : Alkylgruppen, wie $C_{1-6}$-Alkyl, ganz besonders Methyl, Äthyl und Propyl, Phenyl-$C_{1-10}$-alkylgruppen wie Benzyl oder Phenäthyl.

Geeignete symmetrischer Azoester der Formel III sind beispielsweise 2,2'-Azo-bis-(2-acetoxypropan), 2,2'-Azo-bis-(2-acetoyxbutan), 2,2'-Azo-bis-(2-acetoxy-3-methylbutan), 3,3'-Azo-bis-(3-acetoxy-2,4-dimethylpentan), 2,2'-Azo-bis-(2-acetoxy-4-methylpentan), 1,1'-Azo-bis-(1-acetoxy-cyclohexan), 1,1'-Azo-bis-(1-acetoxy-1-phenyläthan), 1,1'-Azo-bis-(1-acetoxy-2- oder 3- oder 4- oder 2/3- oder 2/4- oder 2/3/4-Gemisch-methyl-cyclohexan), 1,1'-Azo-bis-(1-acetoxy-3,3,5-trimethyl-cyclohexan), γ,γ'-Azo-bis-(γ-valerolacton), 2,2'-Azo-bis-(2-formyloxypropan), 2,2'-Azo-bis-(2-formyloxybutan), 2,2'-Azo-bis-(2-formyloxy-4-methylpentan), 1,1'-Azo-bis-(1-formyloxy-cyclohexan), 2,2'-Azo-bis-(2-propionoxypropan), 1,1'-Azo-bis-(1-propionoxy-cyclohexan), 2,2'-Azo-bis-(2-benzoyloxypropan), 1,1'-Azo-bis-(1-benzoyloxycyclohexan), 2,2'-Azo-bis-(2-isobutyryloxybutan), 2,2'-Azobis-(2-pivaloyloxypropan), 2,2'-Azo-bis-(2-isobutyryloxy-4-methylpentan), 1,1'-Azo-bis-(1-isobutyryloxy-cyclohexan).

Geeignete unsymmetrische Azoester der Formel III sind beispielsweise 2-[2'-Acetoxypropyl-(2')-azo]-2-acetoxybutan, 1-[2'-Acetoxybutyl-(2')-azo]-1-propionoxy-cyclohexan, 2-Acetoxy-2'-propionoxy-2,2'-azo-bis-propan, 1-Formyloxy-1'-acetoxy-2,2'-azo-bis-cyclohexan, [2-Acetoxy-4-methyl-pentyl-(2)]-[1'-acetoxy-cyclohexyl-(1')]-diazen.

Geeignete symmetrische Azoäther der Formel III sind beispielsweise 2,2'-Azo-bis-(2-methoxypropan), 2,2'-Azo-bis-(2-methoxybutan), 2,2'-Azo-bis-(2-methoxy-4-methylpentan), 1,1'-Azo-bis-(1-methoxy-cyclohexan), 1,1'-Azo-bis-(1-methoxy-3,3,5-trimethyl-cyclohexan), 2,2'-Azo-bis-(2-äthoxypropan), 2,2'-Azo-bis-(2-äthoxy-4-methyl-pentan), 1,1'-Azo-bis-(1-äthoxy-cyclohexan), 1,1'-Azo-bis-(1-äthoxy-3/4-Gemisch-methyl-cyclohexan), 2,2'-Azo-bis-(2-isopropoxy-propan), 2,2'-Azo-bis-(2-isopropoxybutan), 1,1'-Azo-bis-(1-isopropoxycyclohexan), 2,2'-Azo-bis-(2-propoxybutan), 2,2'-Azo-bis-(2-butoxypropan), 2,2'-Azo-bis-(2-butoxy-4-methylpentan), 1,1'-Azo-bis-(1-butoxy-cyclohexan), 2,2'-Azo-bis-(2-phenoxypropan), 1,1'-Azo-bis-(1-phenoxy-cyclohexan).

Geeignete unsymmetrische Azoäther der Formel III sind beispielsweise 2-[2'-Methoxy-propyl-(2')-azo]-2-methoxybutan (ist gleich mit [2'-Methoxypropyl-(2')]-(2-methoxybutyl-(2)]-diazen), 1-[2'-Methoxybutyl-(2')-azo]-1-äthoxy-cyclohexan, 2-Methoxy-2'-äthoxy-2,2'-azo-bis-propan, 1-Methoxy-1'-isopropoxy-1,1'-azo-bis-cyclohexan, [2'-Äthoxy-4'-methylpentyl-(2')]-[1-äthoxy-cyclohexyl-(1)]-diazen, 2-Isopropoxy-2'-butoxy-2,2'-azo-bis-butan.

Geeignete gemischte Azoesteräther der Formel III sind beispielsweise 2-Propionoxy-2'-propoxy-2,2'-azo-bis-propan, 2-Acetoxy-2-äthoxy-2,2'-azo-bis-butan, 2-Formyloxy-2'-methoxy-2,2'-azo-bis-(4-methylpentan), 1-Acetoxy-1'-methoxy-1,1'-azo-bis-cyclohexan, 1-Formyloxy-1'-methoxy-1,1'-azo-bis-cyclohexan, 2-Formyloxy-2'-propoxy-2,2'-azo-bis-butan, 2-Acetoxy-2'-isopropoxy-2,2'-azo-bis-propan.

Geeignete unsymmetrische Azoester der Formel IV sind beispielsweise 2-tert.-Butylazo- (oder tert.-Amylazo- oder Cumylazo)-2-acetoxy-4-methyl-pentan, 2-tert.-Butylazo- (oder tert.-Amylazo- oder Cumylazo)-2-propionoxy-butan, 1-tert.-Butylazo- (oder tert.-Amylazo- oder Cumylazo)-1-formyloxy-cyclohexan, 2-tert.-Butylazo- (oder tert.-Amylazo- oder Cumylazo)-2-isobutyryloxy-propan, 1-tert.-Butylazo- (oder tert.-Amylazo- oder Cumylazo)-1-acetoxy-cyclohexan, γ-tert.-Butylazo- (oder tert.-Amylazo- oder Cumylazo)-γ-valerolacton.

Geeignete unsymmetrische Azoäther der Formel IV sind beispielsweise 2-tert.-Butylazo- (oder tert.-Amylazo- oder Cumylazo)-2-methoxy-4-methyl-pentan, 1-tert.-Butylazo- oder tert.-Amylazo- oder Cumylazo)-1-methoxy-cyclohexan, 2-tert.-Butylazo- (oder tert.-Amylazo- oder Cumylazo)-2-äthoxybutan, 1-tert.-Butylazo- (oder tert.-Amylazo- oder Cumylazo)-1-isopropoxy-cyclohexan, 2-tert.-Butylazo- (oder tert.-Amylazo- oder Cumylazo)-2-propoxybutan, 2-tert.-Butylazo- (oder tert.-Amylazo- oder Cumylazo)-2-butoxypropan, 2-tert.-Butylazo- (oder tert.-Amylazo- oder Cumylazo)-2-phenoxypropan, 1-tert.-Butylazo- (oder tert.-Amylazo- oder Cumylazo)-1-phenoxy-cyclohexan.

Als Vernetzungsverstärker sind alle Verbindungen mit mindestens zwei reaktionsfähigen (= polymerisierbaren) C-C-Doppel- und/oder C-C-Dreifachbindungen im Molekül entweder einzeln oder im Gemisch miteinander geeignet. Solche Vernetzungsverstärker sind beispielsweise :

Di-, Tri- oder Polyallylverbindungen, beispielsweise Cyanurate (wie Triallylcyanurat, Triallylisocyanurat, Diallylisocyanurat), Allylester zwei-, drei- oder mehrwertiger Carbonsäuren (wie Triallyltrimellitat, Triallyltrimesinat, Diallylsuccinat, -glutarat, -adipat, Diallylphthalat, Diallyldiglykoldicarbonat), zwei-, drei-oder mehrfach N-Allyl-substituierte Säureamide oder Imide (wie N,N,N',N'-Tetraallyladipinsäurediamid), Allyläther auf der Basis von zwei-, drei- oder mehrwertigen Alkoholen (wie Trimethylolpropantriallyläther), Allylester zwei-, drei- oder mehrbasischer anorganischer Säuren (wie Triallylphosphat), allylsubstituierte Aminogruppen tragende s-Triazine (wie 2-Butylamino-4,6-diallyloxy-s-triazin).

Di-, Tri- oder Polymethallylverbindungen, die den oben genannten Di-, Tri- oder Polyallylverbindungen entsprechen, z. B. Trimethallylcyanurat.

Di-, Tri- oder Polycrotylverbindungen, die den oben genannten Di-, Tri- oder Polyallylverbindungen entsprechen, z. B. Tricrotylcyanurat.

Di-, Tri- oder Polymethacrylester, wie Äthylenglycol-dimethacrylat, Hexandiol-(1,4)-dimethacrylat, Trimethylolpropan-trimethacrylat.

Di-, Tri- oder Polyacrylester, die den oben genannten, Di-, Tri- oder Polymethacrylatestern entsprechen, z. B. Diäthylenglykoldiacrylat.

Polyene (= Polymere mit Doppelbindungen), wie Polybutadienkautschuk (= 1,2- oder 1,4-Polybutadien).

Di-, Tri- oder Polyvinylverbindungen, wie Divinylbenzol, Butandiol-(1,4)-divinyläther, Trimethylolpropan-trivinyläther, Divinylsuccinat, Trivinylisocyanurat, 1,2,4-Trivinylcyclohexan.

Verbindungen mit Dreifachbindungen, wie Dipropargylphthalat, Tripropargyltrimellitat.

Di-, Tri- oder Polymaleinimide, wie m- oder p-Phenylen-bis-(maleinimid), N-Allylmaleinimid, 1,6-Bismaleinimidohexan, 4,4'-Methylen-bis-phenyl-bis-maleinimid, Tris-(4-maleinimido-phenyl)-methan, Tris-, Tetrakis- oder Pentakismaleinimide der Formel V

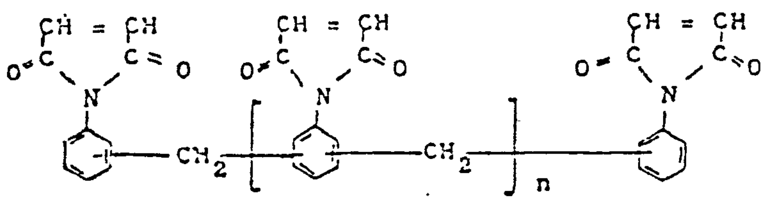

(V)

in der n = 1 oder 2 oder 3.

Verbindungen mit unterschiedlichen Doppel- bzw. Dreifachbindungen im Molekül, wie Allylacrylat, Allylmethacrylat, Diallylmaleinat, Dipropargylmaleinat, 1,3-Bis-(allyloxy)-propyl-(2)-methacrylat, 1-Allyloxy-2,2-dimethylolbutandimethacrylat, 2,2-Bis-(allyloxymethyl)-butyl-(1)-methacrylat, N-Allylmaleinimid.

Für Polypropylen eignen sich als Vernetzungsverstärker besonders Verbindungen mit 3 C-C-Doppel- oder -Dreifachbindungen, ganz besonders Triallylcyanurat.

Als Polymere kommen alle durch Radikalbildner vernetzbaren polymeren oder copolymeren Verbindungen mit $-CH_2-$ und/oder $-\underset{|}{C}H-$-Gruppen, die auf synthetischem Wege erhalten wurden oder natürlicher Genese sind, sowie beliebige Mischungen derselben in Frage. Solche Verbindungen sind beispielsweise Hochdruckpolyäthylen niederer und hoher Dichte, Niederdruckpolyäthylen hoher und niederer Dichte, chloriertes Polyäthylen, chlorsulfoniertes Polyäthylen, Polypropylen, Polybutylen-(1), Poly-(4-methylpenten-(1)] ; Polyvinylchlorid, Polyvinylacetat, Polyacrylsäureester ; Äthylen-Vinylacetat-Copolymer, Äthylen-Propylen-Copolymer, Äthylen-Butylen-Copolymer, Äthylen-Propylen-Butylen-Copolymer, Äthylen-Vinylchlorid-Copolymer, Vinylchlorid-Vinylacetat-Copolymer, Vinylchlorid-Vinylidenchlorid-Copolymer, Äthylen-Kohlenoxid-Copolymer ; Naturkautschuk (Polyisopren), Polybutadien, Polychloropren (Neopren), synthetisches Polyisopren ;

Äthylen-Propylen-Äthylidennorbornen (oder Cyclopentadien oder Hexadien oder Butadien)-Copolymer, Butadien-Styrol-Copolymer, Butadien-Acrylnitril-Copolymer, Butadien-Styrol-Acrylnitril-Copolymer, Styrol-Isopren-Blockpolymer, Butylkautschuk (Isobutylen-Isopren-Copolymer) ; Siliconkautschuk ; gesättigte Polyester, Polyamide, Polyurethane, Polyäther und Polyacetale.

Als organische Peroxide sind beispielsweise geeignet :

a) Dialkylperoxide, z. B. Dicumylperoxid, tert.-Butyl-cumylperoxid, α,α-Bis-(tert.-butylperoxy)-1,4-(oder 1,3)-diisopropylbenzol, 2,5-Bis-(tert.-butylperoxy)-2,5-dimethyl-hexan oder -hexin-(3), 3-(tert.-Butylperoxy)-3-phenyl-phthalid ;

b) Perketale, z. B. 1,1-Bis-(tert.-butylperoxy)-3,3,5-trimethylcyclohexan, 4,4-Bis-(tert.-butylperoxy)-pentansäure-n-butylester ;

c) gemischte Dialkylperoxidperketale, z. B. 3,3,6,6,9,9-Hexamethyl-1,2,4,5-tetraoxanonan ;

d) Perester, z. B. tert.-Butyl-perbenzoat, tert.-Butyl-per-3,5,5-trimethylhexanoat, tert.-Butyl-per-2-äthylhexanoat ;

e) Monoperoxycarbonatester, z. B. OO-tert.-Butyl-O-2-äthylhexyl-monoperoxycarbonat, OO-tert.-Butyl-O-myristyl-monoperoxycarbonat, Decandiol-(1,10)-bis-(tert.-butylperoxycarbonat) ;

f) Diacylperoxide, z. B. 3,5,5-Trimethylhexanoylperoxid, Lauroylperoxid, O-Methylbenzoylperoxid, Benzoylperoxid, 2,4-Dichlorbenzoylperoxid ;

g) Ätherperoxide, z. B. 2-tert.-Butylperoxy-2-hexoxy-propan, 2,5-Bis-[2-butyloxypropyl-(2)-peroxy]-2,5-dimethylhexan ;

h) Ketonperoxid-perester, z. B. Bis-[2-(2-äthylhexanoylperoxy)-butyl(2)]-peroxid, Bis-(2-lauroylperoxy)-butyl-(2)-peroxid, Bis-(2-benzoylperoxy)-butyl-(2)-peroxid ;

i) tert.-Alkylperoxyketonperoxide, z. B. 3,5-Di-tert.-butylperoxy-3,5-dimethyl-1,2-dioxacyclopentan.

Als organische Azide sind beispielsweise geeignet :

a) Mono-, Di- oder Polysulfonylazide, z. B. Decan-1,10-bis-(sulfonazid), Octadecan-1,9-18-tris-(sulfonazid), Tris-(p- oder m-azidosulfonylphenyl)-isocyanurat, Benzol-1,3-disulfonazid ;

b) Mono-, Di- oder Polyazidoformiate, z. B. Tetramethylen-bis-(azidoformiat), Stearylazidoformiat, Bis(β-azidoformyloxyäthyl)-terephthalat ;

c) Arylazide, z. B. 2,6-Bis-(4-azidobenzol)-cyclohexanon, 4-Azido-δ-chlorcinnamylidenessigsäure bzw. deren Ester.

Als Verschäumungsmittel sind beispielsweise geeignet Azodicarbonamid, Azobisisobutyronitril, Azobisisobuttersäurediäthylester, 4,4'-Azo-bis-(4-nitrilo-valeriansäure), Di-azoaminobenzol, p,p'-Hydroxybis-(benzolsulfonyl)-hydrazid, Benzoldisulfonylhydrazid, Diphenylsulfon-3,3'-disulfohydrazid, N,N-Dinitroso-pentamethylentetramin, p,p'-Azo-bis-(benzolsulfonylsemicarbonamid), 5-Morpholyl-(4)-1,2,3,4-thiatriazol, Trihydrazintriazin, $NaHCO_3$ + Carbonsäure.

Die erfindungsgemäße Vernetzung kann auch in Gegenwart von Füllstoffen (wie Ruß, Calciumcarbonat, Talkum, Calciumsilicat, Aluminiumsilicat (Kaolin) oder Kieselsäure ($SiO_2$), Glasfasern, Pigmenten, Antioxidantien oder anderen Zusatzstoffen, wie Extender, Weichmacher, Flammschutzmittel, antistatische Mittel, Gleitmittel, ausgeführt werden.

Gewisse Polymere, wie Polyäthylen hoher Dichte, können, falls sich in ihrem Molekül Doppel- (oder Dreifach-) Bindungen befinden, neben ihrer Polymerfunktion auch die Funktion des Vernetzungsverstärkers ausüben.

Die zur Vernetzung erforderliche Energiezufuhr kann a) durch direkten Kontakt des zu vernetzenden Polymeren mit einem vorgeheizten Material (z. B. Stahl, geschmolzenes Metall, geschmolzenes Salz, Wasser, Luft, Stickstoff), b) durch elektromagnetische Strahlung [z. B. IR-, UHF- (= Mikrowellen), Röntgen-, Gamma-Strahlen) oder c) durch Korpuskularstrahlen (z. B. Alpha- oder Betastrahlen (= Elektronenstrahlen)] erfolgen. Dabei ist zu beachten, daß bestimmte Arten der Energiestrahlung, z. B. Gamma- oder Betastrahlen, auch in Abwesenheit von Vernetzungsmitteln Vernetzung bewirken ; die Anwesenheit von Radikalbildnern und Vernetzungsverstärkern verbessert jedoch den Vernetzungsgrad.

Die Erfindung wird durch die nachfolgenden Beispiele erläutert.

## Beispiele

A. Vernetzung

Das zu vernetzende Polymere wird als Pulver mit dem (den) vernetzend wirkenden Agens (Agentien) homogen vermischt, gegebenenfalls unter Zuhilfenahme eines Lösungsmittels (Aceton, Dichlormethan), das vor dem Vernetzungsvorgang abgedampft wird. Anschließend wird die Mischung zur Vernetzung des Polymeren aufgeheizt und eine bestimmte Zeit bei der Vernetzungstemperatur belassen.

B. Bestimmung des Vernetzungsgrades durch Extraktion

Das nach dem Abkühlen in Streifen geschnittene vernetzte Polymere wird in ein genau gewogenes feinmaschiges Drahtnetz eingepackt und nach abermaligem Wägen von Drahtnetz und Polymer 1 Stunde mit siedendem Xylol (80 ml Xylol für 1 g vernetztes Polymeres) in einem 100 ml-Erlenmeyer-Kolben unter Rückfluß extrahiert. Danach werden Drahtnetz und Inhalt mit warmem Xylol gewaschen, bei 150 bis 160 °C zur Trocknung das Xylol vollständig abgedampft (1 Stunde) und der Gewichtsverlust, der dem herausgelösten Polymeranteil entspricht, durch nochmaliges Wägen bestimmt. Aus der Differenz zum Gewicht des Polymeren vor der Extraktion ergibt sich der ungelöste Polymeranteil, dessen Menge, ausgedrückt in % der ursprünglichen Polymer-Gesamtmenge, den Vernetzungsgrad ergibt.

C. Für die in den Beispielen verwendeten Initiatoren wurden folgende Abkürzungen gebraucht :

a) Azoester oder Azoäther

LUAZO AP = 2,2'-Azo-bis-(2-acetoxypropan) (= sym. Azoester)
LUAZO ABA = 2,2'-Azo-bis-(2-acetoxybutan) (= sym. Azoester)
LUAZO AMP = 2,2'-Azo-bis-(2-acetoxy-4-methylpentan) (= sym. Azoester)
LUAZO AC = 1,1'-Azo-bis-(1-acetoxy-cyclohexan) (= sym. Azoester)
LUAZO VL = γ,γ'-Azo-bis-(γ-valerolacton) (= zym. Azoester)
sym. Azoäther = 1,1'-Azo-bis-(1-methoxy-cyclohexan)
unsym. Azoester = 1-tert.-Butylazo-1-acetoxy-cyclohexan
unsym. Azoäther = 1-tert.-Butylazo-1-methoxy-cyclohexan

b) Peroxide

Peroctoat = tert.-Butylperoxy-2-äthylhexanoat (Perester)
Perbenzoat = tert.-Butylperoxybenzoat (Perester)
LUPEROX 231 = 1,1-Bis-(tert.-butylperoxy)-3,3,5-tri-methylcyclohexan (Perketal)
Dicup = Dicumylperoxid (Dialkylperoxid)
LUPEROX 101 = 2,5-Bis-(tert.-butylperoxy)-2,5-dimethylhexan (Dialkylperoxid)
LUPEROX 130 = 2,5-Bis-(tert.-butylperoxy)-2,5-dimethylhexin-(3) (Dialkylperoxid)

D. Die Vernetzungsverstärker wurden wie folgt abgekürzt :

TAC = Triallylcyanurat
IsoTAC = Triallylisocyanurat
DiIsoAC. = Diallylisocyanurat
2-Butylam-DAC = 2-n-Butylamino-4,6-diallyloxy-s-triazin
2-Octylam-DAC = 2-n-Octylamino-4,6-diallyloxy-s-triazin
2-Stearylam-DAC = 2-Stearylamino-4,6-diallyloxy-s-triazin
TAPA = Triallylphosphat
TATM = Triallyltrimellitat
DAP = Diallylphthalat
DADDC = Diallyldiglykoldicarbonat
DAM = Diallylmaleinat
TRIDA = Trimethylolpropan-diallyläther
TRIM = Trimethylolpropan-trimethacrylat
EDMA = Äthylenglykol-dimethacrylat
m-PBMI = m-Phenylen-bis-(maleinimid)

Beispiel 1

Hochdruckpolyäthylenpulver niederer Dichte (Schmelzindex 70 g/10 Min. ; Dichte 0,918) wird 40 Minuten bei 215 °C mittels des symmetrischen Azoesters LUAZO AP (2,2'-Azo-bis-(2-acetoxypropan) als Vernetzungsmittel unter Mitwirkung von TAC (Triallylcyanurat) als Vernetzungsverstärker unter Atmosphärendruck vernetzt.

Aus diesem Beispiel ist die Regel zu erkennen, daß die wirkungsvollste Aktivierung des Azoesters durch etwa die halbe, aber auch die doppelte Menge TAC (Vernetzungsverstärker) erfolgt.

Bemerkenswert ist, daß 0,4 % Azoester allein einen Vernetzungsgrad von 28 %, die Kombination aus 0,4 % Azoester + 0,2 % TAC aber einen Vernentzungsgrad von 74 % ergeben, der so hoch liegt wie bei Verwendung von 1,5 % Azoester allein. Noch bemerkenswerter ist, daß eine Kombination aus 0,8 % Azoester + 0,6 % TAC einen Vernetzungsgrad von 81 % ergibt, der genau so hoch liegt wie derjenige, der mit 4 % oder 5 % Azoester allein (81 % und 82 %) zu erzielen ist.

| Zusätze | Vernetzungsgrade |
|---|---|
| a) ohne Zusätze | 6 % |
| b) 0,1 % LUAZO AP | 11 % |
| 0,3 % LUAZO AP | 25 % |
| 0,4 % LUAZO AP | 28 % |
| 0,5 % LUAZO AP | 28 % |
| 0,6 % LUAZO AP | 33 % |
| 0,8 % LUAZO AP | 60 % |
| 1 % LUAZO AP | 62 % |
| 1,5 % LUAZO AP | 71 % |
| 2 % LUAZO AP | 76 % |
| 3 % LUAZO AP | 80 % |
| 4 % LUAZO AP | 81 % |
| 5 % LUAZO AP | 82 % |
| c) 0,1 % TAC | 10 % |
| 0,15 % LUAZO AP | 11 % |
| 0,2 % LUAZO AP | 12 % |
| 0,3 % LUAZO AP | 14 % |
| 0,4 % LUAZO AP | 18 % |
| 0,5 % LUAZO AP | 20 % |
| 0,6 % LUAZO AP | 22 % |
| 0,8 % LUAZO AP | 25 % |
| 1 % LUAZO AP | 27 % |

Fortsetzung

| Zusätze | Vernetzungsgrade |
|---|---|
| 1,5 % LUAZO AP | 29 % |
| 2 % LUAZO AP | 36 % |
| d) 0,2 % LUAZO AP + 0,15 % TAC | 48 % |
| 0,2 % LUAZO AP + 0,2 % | 38 % |
| e) 0,4 % LUAZO AP + 0,1 % TAC | 61 % |
| 0,4 % LUAZO AP + 0,2 % TAC | 74 % |
| 0,4 % LUAZO AP + 0,3 % TAC | 74 % |
| 0,4 % LUAZO AP + 0,4 % TAC | 59 % |
| f) 0,5 % LUAZO AP + 0,25 % TAC | 64 % |
| 0,5 % LUAZO AP + 0,5 % TAC | 44 % |
| 0,5 % LUAZO AP + 1 % TAC | 73 % |
| 0,5 % LUAZO AP + 1,5 % TAC | 58 % |
| 0,5 % LUAZO AP + 2 % TAC | 50 % |
| 0,5 % LUAZO AP + 2,5 % TAC | 53 % |
| 0,5 % LUAZO AP + 3 % TAC | 53 % |
| 0,5 % LUAZO AP + 4 % TAC | 63 % |
| g) 0,6 % LUAZO AP + 0,3 % TAC | 74 % |
| 0,6 % LUAZO AP + 0,4 % TAC | 52 % |
| 0,6 % LUAZO AP + 0,6 % TAC | 52 % |
| 0,6 % LUAZO AP + 0,8 % TAC | 75 % |
| 0,6 % LUAZO AP + 1 % TAC | 76 % |
| h) 0,8 % LUAZO AP + 0,4 % TAC | 79 % |
| 0,8 % LUAZO AP + 0,6 % TAC | 81 % |
| 0,8 % LUAZO AP + 0,8 % TAC | 63 % |
| 0,8 % LUAZO AP + 1 % TAC | 79 % |
| 0,8 % LUAZO AP + 1,5 % TAC | 70 % |
| i) 1 % LUAZO AP + 0,1 % TAC | 64 % |
| 1 % LUAZO AP + 0,4 % TAC | 69 % |
| 1 % LUAZO AP + 1 % TAC | 68 % |
| 1 % LUAZO AP + 1,5 % TAC | 48 % |
| 1 % LUAZO AP + 2 % TAC | 71 % |
| j) 2 % LUAZO AP + 0,1 % TAC | 81 % |
| 2 % LUAZO AP + 0,4 % TAC | 71 % |
| 2 % LUAZO AP + 1 % TAC | 77 % |
| 2 % LUAZO AP + 1,5 % TAC | 63 % |
| 2 % LUAZO AP + 2 % TAC | 70 % |

Beispiel 2

Äthylen-Propylen-Copolymeres, gesättigter Typ (AP-Kautschuk) mit einer Mooney-Viskosität ML 1 + 4 (100 °C) von 45 wird 40 Minuten bei 215 °C mittels LUAZO AP als Vernetzungsmittel unter Mitwirkung von TAC als Vernetzungsverstärker in An- und Abwesenheit von Ruß als Füllstoff unter Atmosphärendruck vernetzt. Vernetzung und Bestimmung des Vernetzungsgrades werden wie eingangs beschrieben ausgeführt. Allerdings erfolgte die Einarbeitung der Vernetzungsagentien auf der warmen Walze.

Dieses Beispiel zeigt besonders deutlich den großen Vorteil einer kombinierten Anwendung von Azoester und Vernetzungsverstärker, da mit dem Azoester allein AP-Kautschuk keine Vernetzung zeigt. Der Versuch zeigt auch, daß der Füllstoff Ruß nicht stört. Alle in Gegenwart von LUAZO AP erhitzten Proben e), f), g), h), i) und j) waren feinporig verschäumt.

| Azoester und/oder Ruß Vernetzungsverstärker | | Vernetzungsgrad |
|---|---|---|
| a) ohne Zusätze | | 0,7 % |
| b) 3 % Ruß | | 2,8 % |
| c) 0,7 % TAC | | 7 % |
| d) 0,7 % TAC | + 3 % Ruß | 18 % |
| e) 1,5 % LUAZO AP | | 0,7 % |
| f) 5 % LUAZO AP | | 1,9 % |
| g) 1,5 % LUAZO AP | + 3 % Ruß | 0,9 % |
| h) 5 % LUAZO AP | + 3 % Ruß | 1,4 % |
| i) 1,5 % LUAZO AP + 0,7 % TAC | | 78 % |
| j) 1,5 % LUAZO AP + 0,7 % TAC + 3 % Ruß | | 74 % |

Beispiel 3

Äthylen-Vinylacetat-Copolymer-Pulver (EVA) mit einem Vinylacetat-Anteil von 33 %, einem Äthylen-Anteil von 67 % und einem Schmelzindex von 25 g/10 Min. (bei 190 °C) wird 40 Minuten bei 220 °C mittels der beiden symmetrischen Azoester LUAZO AMP oder LUAZO AP als Vernetzungsmittel unter Mitwirkung von TAC als Vernetzungsverstärker unter Atmosphärendruck vernetzt. Zur Bestimmung des Vernetzungsgrades wird die 1-stündige Extraktion mit dem 80-fachen Volumen siedendem Xylol zweimal (statt nur einmal) durchgeführt.

Dieses Beispiel zeigt, daß mit diesem schwerer vernetzbaren Polymeren die maximal erzielten Vernetzungsgrade niedriger als in Beispiel 1 oder 2 sind. Aber auch hier bietet die Mitverwendung des Vernetzungsverstärkers TAC deutliche Vorteile.

Alle in Gegenwart von LUAZO AP erhitzten Proben waren feinporig verschäumt.

| Zusätze | Vernetzungsgrade |
|---|---|
| (A) Mit LUAZO AMP | |
| a) ohne Zusätze | 6 % |
| b) 0,1 % LUAZO AMP | 13 % |
| 0,2 % LUAZO AMP | 18 % |
| 0,5 % LUAZO AMP | 19 % |
| 1 % LUAZO AMP | 21 % |
| 2 % LUAZO AMP | 28 % |
| 4 % LUAZO AMP | 37 % |
| 5 % LUAZO AMP | 38 % |
| c) 0,5 % TAC | 6 % |
| 1 % TAC | 7 % |
| 2 % TAC | 8 % |
| d) 1 % LUAZO AMP + 0,5 % TAC | 39 % |
| 1 % LUAZO AMP + 1 % TAC | 50 % |
| 1 % LUAZO AMP + 2 % TAC | 54 % |
| (B) Mit LUAZO AP | |
| a) ohne Zusätze | 6 % |
| b) 0,1 % LUAZO AP | 10 % |
| 0,2 % LUAZO AP | 12 % |
| 0,5 % LUAZO AP | 19 % |
| 1 % LUAZO AP | 21 % |
| 2 % LUAZO AP | 33 % |
| 4 % LUAZO AP | 44 % |
| 5 % LUAZO AP | 49 % |
| c) 0,5 % TAC | 6 % |
| 1 % TAC | 7 % |
| 2 % TAC | 8 % |
| d) 0,5 % LUAZO AP + 0,5 % TAC | 54 % |
| 0,5 % LUAZO AP + 1 % TAC | 34 % |
| e) 1 % LUAZO AP + 0,5 % TAC | 53 % |
| 1 % LUAZO AP + 1 % TAC | 64 % |
| 1 % LUAZO AP + 2 % TAC | 62 % |

Beispiel 4

Hochdruckpolyäthylenpulver niederer Dichte (Schmelzindex 70 g/10 Min. ; Dichte 0,918) wird 40 Minuten bei 215 °C mittels drei symmetrischer Azoester (LUAZO AP, LUAZO AC, LUAZO VL) bzw. eines unsymmetrischen Azoesters unter Mitwirkung von TAC als Vernetzungsverstärker unter Atmosphärendruck vernetzt.

Dieses Beispiel zeigt, daß die Vernetzungsgrade von 0,6 % Azoester + 0,3 % TAC (81 %, 82 %) in der gleichen Größenordnung liegen wie die Vernetzungsgrade von 2 bis 3 % Azoester allein. Die Kombination mit der halben Menge TAC erlaubt also eine Verringerung der Azoester-Menge auf rund 1/5 zur Erzielung des gleichen Vernetzungsgrades.

Alle in Gegenwart der Azoester erhitzten Proben waren feinporig verschäumt.

| Zusätze | Vernetzungsgrade |
|---|---|
| (A) Mit LUAZO AP | |
| a) 0,6 % LUAZO AP | 47 % |
| 2 % LUAZO AP | 77 % |

Fortsetzung

| Zusätze | Vernetzungsgrade |
|---|---|
| 3 % LUAZO AP | 84 % |
| b) 0,3 % TAC | 19 % |
| c) 0,6 % LUAZO AP + 0,3 % TAC | 81 % |
| (B) Mit LUAZO AC | |
| a) 0,6 % LUAZO AC | 14 % |
| 2 % LUAZO AC | 64 % |
| 3 % LUAZO AC | 75 % |
| b) 0,3 % TAC | 19 % |
| c) 0,6 % LUAZO AC + 0,3 % TAC | 81 % |
| (C) Mit LUAZO VL | |
| a) 0,6 % LUAZO VL | 30 % |
| 2 % LUAZO VL | 89 % |
| 3 % LUAZO VL | 85 % |
| b) 0,3 % TAC | 19 % |
| c) 0,6 % LUAZO VL + 0,3 % TAC | 82 % |
| (D) Mit unsymmetrischem Azoester | |
| a) 0,6 % unsymm. Azoester | 31 % |
| 2 % unsymm. Azoester | 84 % |
| 3 % unsymm. Azoester | 84 % |
| b) 0,3 % TAC | 19 % |
| c) 0,6 % unsymm. Azoester + 0,3 % TAC | 81 % |

Beispiel 5

Hochdruckpolyäthylenpulver niederer Dichte (Schmelzindex 70 g/10 Min. ; Dichte 0,918) wird 40 Minuten bei 205 °C mittels des symmetrischen Azoesters LUAZO ABA (2,2'-Azo-bis-(2-acetoxybutan) unter Mitwirkung von Triallylisocyanurat (IsoTAC) als Vernetzungsverstärker unter Atmosphärendruck vernetzt. Die in Gegenwart von LUAZO ABA vernetzte Probe war feinporig verschäumt.

| Zusätze | Vernetzungsgrade |
|---|---|
| a) ohne Zusätze | 15 % |
| b) 0,6 % LUAZO ABA | 12 % |
| c) 0,3 % IsoTAC | 15 % |
| d) 0,6 % LUAZO ABA + 0,3 % IsoTAC | 54 % |

Beispiel 6

Hochdruckpolyäthylenpulver niederer Dichte (Schmelzindex 70 g/10 Min. ; Dichte 0,918) wird 40 Minuten bei 215 °C mittels des symmetrischen Azoesters LUAZO AP als Vernetzungsmittel unter Mitwirkung von TAC als Vernetzungsverstärker in Gegenwart von Azodicarbonamid als Verschäumungsmittel unter Atmosphärendruck vernetzt.

Dieses Beispiel zeigt, daß die Kombination Azoverbindung + Vernetzungsverstärker auch in Gegenwart eines Verschäumungsmittels eine gute Vernetzung bewirkt ; b), d) und e) waren verschäumt.

| Zusätze | Vernetzungsgrade |
|---|---|
| a) ohne Zusätze | 12 % |
| b) 0,6 % LUAZO AP | 19 % |
| c) 0,3 % TAC | 23 % |
| d) 0,6 % LUAZO AP + 0,3 % TAC | 74 % |
| e) 0,6 % LUAZO AP + 0,3 % TAC + 5 % Azodicarbonamid | 79 % |

Beispiel 7

Hochdruckpolyäthylenpulver niederer Dichte (Schmelzindex 70 c/10 Min. ; Dichte 0,918) wird 40 Minuten bei 215 °C mittels der symmetrischen Azoester LUAZO AP und LUAZO VL unter Mitwirkung verschiedener Vernetzungsverstärker unter Atmosphärendruck vernetzt.

Alle in Gegenwart von LUAZO AP und LUAZO VL vernetzten Proben waren feinporig verschäumt.

(Siehe Tabelle Seite 11 f.)

| Zusätze | Vernetzungsgrade |
|---|---|
| (I) Mit LUAZO AP | |
| a) ohne Zusätze | 9 % |
| b) 0,5 % LUAZO AP | 28 % |
| 0,6 % LUAZO AP | 33 % |
| A) a) 0,2 % 2-Butylam-DAC (Butylam) | 16 % |
| 0,3 % 2-Butylam-DAC (Butylam) | 18 % |
| 0,5 % 2-Butylam-DAC (Butylam) | 19 % |
| 1 % 2-Butylam-DAC (Butylam) | 28 % |
| 2,3 % 2-Butylam-DAC (Butylam) | 38 % |
| b) 0,5 % LUAZO AP + 0,2 % Butylam | 38 % |
| 0,5 % LUAZO AP + 0,5 % Butylam | 53 % |
| 0,5 % LUAZO AP + 2,3 % Butylam | 73 % |
| c) 0,6 % LUAZO AP + 0,3 % Butylam | 78 % |
| B) a) 0,2 % 2-Octylam-DAC (Octylam) | 18 % |
| 0,5 % 2-Octylam-DAC (Octylam) | 19 % |
| 1 % 2-Octylam-DAC (Octylam) | 27 % |
| 2,8 % 2-Octylam-DAC (Octylam) | 24 % |
| b) 0,5 % AP + 0,5 % Octylam | 62 % |
| 0,5 % AP + 2,8 % Octylam | 74 % |
| C) a) 0,3 % DiIsoAC | 20 % |
| 0,6 % AP + 0,3 % DiIsoAC | 70 % |
| D) a) 0,3 % Butandiol-(1,4)-divinyläther | 11 % |
| b) 0,6 % AP + 0,3 % Butandiol-(1,4)-divinyläther | 60 % |
| E) a) 0,3 % Diallylphthalat (DAP) | 12 % |
| b) 0,6 % AP + 0,3 % DAP | 54 % |
| F) a) 0,3 % TAPA | 14 % |
| b) 0,6 % AP + 0,3 % TAPA | 65 % |
| G) a) 0,3 % Diallyldiclykoldicarbonat (DADDC) | 15 % |
| b) 0,6 % AP + 0,3 % DADDC | 55 % |
| H) a) 0,3 % Diallylmaleinat | 13 % |
| b) 0,6 % AP + 0,3 % Diallylmaleinat | 55 % |
| (II) Mit LUAZO VL | |
| a) ohne Zusätze | 10 % |
| b) 0,6 % LUAZO VL (= VL) | 14 % |
| A) a) 0,3 % TAC | 18 % |
| b) 0,6 % VL + 0,3 % TAC | 78 % |
| B) a) 0,3 % IsoTAC | 15 % |
| b) 0,6 % VL + 0,3 % IsoTAC | 82 % |
| C) a) 0,3 % DiIsoAC | 20 % |
| b) 0,6 % VL + 0,3 % DiIsoAC | 76 % |
| D) a) 0,3 % 2-Butylam-DAC (= Butylam) | 18 % |
| b) 0,6 % VL + 0,3 % Butylam | 61 % |
| E) a) 0,3 % 2-Octylam-DAC (= Octylam) | 18 % |
| b) 0,6 % VL + 0,3 % Octylam | 67 % |
| F) a) 0,3 % 2-Stearylam-DAC (= Stearylam) | 10 % |
| b) 0,6 VL + 0,3 % Stearylam | 50 % |
| G) a) 0,3 % TAPA | 12 % |
| b) 0,6 % VL + 0,3 % TAPA | 64 % |
| H) a) 0,3 % Butandiol-(1,4)-divinyläther | 9 % |
| b) 0,6 % VL + 0,3 % Butandiol-(1,4)-divinyläther | 28 % |
| I) a) 0,3 % Trimethylolpropan-diallyläther (TRIDA) | 8 % |
| b) 0,6 % VL + 0,3 % TRIDA | 18 % |
| J) a) 0,3 % Diallylphthalat (DAP) | 12 % |
| b) 0,6 % VL + 0,3 % DAP | 58 % |
| K) a) 0,3 % Diallyldiglykoldicarbonat (DADDC) | 15 % |
| b) 0,6 % VL + 0,3 % DADDC | 77 % |
| L) a) 0,3 % Diallylmaleinat | 13 % |
| b) 0,6 % VL + 0,3 % Diallylmaleinat | 80 % |
| M) a) 0,3 % Äthylenglykoldimethacrylat (EDMA) | 7 % |
| b) 0,6 % VL + 0,3 EDMA | 43 % |
| N) a) 0,3 % Trimethylolpropantrimethacrylat (TRIM) | 20 % |
| b) 0,6 % VL + 0,3 % TRIM | 54 % |
| O) a) 0,3 % m-Phenylen-bis-(maleinimid) (mPBMI) | 71 % |
| b) 0,6 % VL + 0,3 % m-PBMI | 84 % |

Beispiel 8

Heißvulkanisierbarer Siliconkautschuk (Silopren VS 60E 2302, Methyl- und Vinylgruppen enthaltend) wird 40 Minuten bei 220 °C mit einer Reihe von Assestern und Azoäthern als Vernetzungsmittel unter Mitwirkung von 0,3 % TAC als Vernetzungsverstärker unter Atmosphärendruck vernetzt. Vernetzungsmittel und Vernetzungsverstärker wurden auf einer 70 °C warmen Walze in den Kautschuk eingearbeitet. Vernetzung und Bestimmung des Vernetzungsgrades werden wie eingangs beschrieben ausgeführt (also 1 c vernetzer Kautschuk wird mit 80 ml siedendem Xylol 1 Stunde extrahiert).

Die Azoverbindungen enthaltenden Proben waren feinporig verschäumt.

| Zusätze | Vernetzungsgrade |
|---|---|
| a) ohne Zusätze | 1 % |
| b) 0,6 % LUAZO AP + 0,3 % TAC | 74 % |
| c) 0,6 % LUAZO AMP + 0,3 % TAC | 77 % |
| d) 0,6 % unsymmetr. Azoester + 0,3 % TAC | 64 % |
| e) 0,6 % symmetr. Azoäther + 0,3 % TAC | 78 % |
| f) 0,6 % unsymmetr. Azoäther + 0,3 % TAC | 68 % |

Beispiel 9

Hochdruckpolyäthylenpulver niederer Dichte (Schmelzindex 70 g/10 Min. ; Dichte 0,918) wird 40 Minuten bei verschiedenen Temperaturen (180°, 190°, 200 °C) mittels zwei symmetrischer Azoester (LUAZO AMP und LUAZO ABA) und eines unsymmetrischer. Azoäthers als Vernetzungsmittel unter Mitwirkung von TAC als Vernetzungsverstärker unter Atmosphärendruck vernetzt.

Dieses Beispiel zeigt, daß auch bei tieferen Temperaturen (180°, 190°, 200 °C) durch die halbe Menge TAC (0,3 %) eine beträchtliche Erhöhung des Vernetzungsgrades im Vergleich zur Azoverbindung alleine erzielt werden kann.

Alle in Gegenwart der Azoverbindung vernetzten Proben waren feinporig verschäumt.

Dieses Beispiel 9 ist eine Ergänzung zu Beispiel 4.

| | Zusätze | Vernetzungsgrade bei 180 °C | 190 °C | 200 °C |
|---|---|---|---|---|
| | ohne Zusätze | 5,2 % | 5,8 % | 6,5 % |
| (A) | a) 0,6 % unsym. Arcäther | 11 % | — | — |
| | b) 0,3 % TAC | 10 % | — | — |
| | c) 0,6 % unsym. Azoäther + 0,3 % TAC | 52 % | — | — |
| (E) | a) 0,6 % LUAZO AMP | 11 % | 49 % | — |
| | b) 0,3 % TAC | 10 % | 19 % | — |
| | c) 0,6 % LUAZO AMP + 0,3 % TAC | 43 % | 64 % | — |
| (C) | a) 0,6 % LUAZO ABA | | | 8 % |
| | b) 0,3 % TAC | | | 18 % |
| | c) 0,6 % LUAZO ABA + 0,3 % TAC | | | 65 % |

Beispiel 10

In allen vorhergehenden Beispielen war die Vernetzung drucklos (also bei 1,013 bar) durchgeführt worden, wobei immer ein verschäumtes Material erhalten wurde. Im vorliegenden Beispiel 10 wird Polyäthylen unter Druck vernetzt. Zu diesem Zweck wird Hochdruckpolyäthylenpulver niederer Dichte (Schmelrindex 70 g/10 Min. ; Dichte 0,918), das 0,6 % symmetrischen Azoester LUAZO AP als Vernetzungsmittel und 0,3 % TAC als Vernetzungsverstärker homogen eingearbeitet enthält, in einem Zylinder zwischen zwei beweglichen, genau eingepaßten Kolben unter Druck 2 Stunden bei 215 °C vernetzt. Zylinder mit Kolben befanden sich zwischen zwei Stahlplatten, die an ihren Ecken durch vier Schrauben mit Muttern gegeneinander gedrückt wurden. Durch Anziehen der Schraubenmuttern wurde der Druck erzeugt. Während der Vernetzungszeit wurden die Muttern mehrmals nachgezogen.

Auf diese Weise wurde eine dünne, weiße, unverschäumte, aber vernetzte Polyäthylenplatte erhalten, deren Vernetzungsgrad bei 84 % lag.

## Beispiel 11

Hochdruckpolyäthylenpulver niederer Dichte (Schmelzindex 70 g/10 Min. ; Dichte 0,918) wird 40 Minuten bei 180 °C bzw. 190 °C mittels Kombinationen aus zwei oder drei Azoverbindungen unter Mitwirkung von TAC als Vernetzungsverstärker unter Atmosphärendruck vernetzt.

Die in Gegenwart der Azoverbindungen vernetzten Proben waren feinporig verschäumt.

| Zusätze | Vernetzungsgrade bei 180 °C | 190 °C |
|---|---|---|
| ohne Zusätze | 5,2 % | 5,8 % |
| 0,3 % TAC | 10 % | 15 % |
| a) 0,3 % sym. Azoäther + 0,3 % unsym. Azoäther | 8 % | 31 % |
| 0,3 % sym. Azoäther + 0,3 % unsym. Azoäther + 0,3 % TAC | 53 % | 60 % |
| b) 0,3 % LUAZO AMP + 0,3 % sym. Azoäther | 7 % | 44 % |
| 0,3 % LUAZO AMP + 0,3 % sym. Azoäther + 0,3 % TAC | 45 % | 60 % |
| c) 0,3 % LUAZO AMP + 0,3 % unsym. Azoäther | — | 12 % |
| 0,3 % LUAZO AMP + 0,3 % unsym. Azoäther + 0,3 % TAC | 51 | |
| d) 0,2 % LUAZO AMP + 0,2 % LUAZO ABA + 0,2 % unsym. Azoäther | 11 % | |
| 0,2 % LUAZO AMP + 0,2 % LUAZO ABA + 0,2 % unsym. Azoäther + 0,3 % TAC | — | 61 % |
| e) 0,2 % LUAZO AMP + 0,2 % sym. Azoäther + 0,2 % unsym. Azoäther | 46 % | — |
| 0,2 % LUAZO AMP + 0,2 % sym. Azoäther + 0,2 % unsym. Azoäther + 0,3 % TAC | 96 % | — |
| f) 0,2 % sym. Azoäther + 0,2 % unsym. Azoäther + 0,2 % unsym. Azoester | — | 12 % |
| 0,2 % sym. Azoäther + 0,2 % unsym. Azoäther + 0,2 % unsym. Azoester + 0,3 % TAC | — | 62 % |

## Beispiel 12

Hochdruckpolyäthylenpulver niederer Dichte (0,918) mit einem Schmelzindex von 70 g/10 Min. wird 40 Minuten bei 185 °C mittels des symmetrischen Azoäthers 1,1'-Azo-bis-(1-methoxy-cyclohexan) als Vernetzungsmittel unter Mitwirkung von TAC als Vernetzungsverstärker unter Atmosphärendruck vernetzt.

Dieses Beispiel ist eine Ergänzung zu Beispiel 4 und Beispiel 9, in denen ein symmetrischer Azoäther fehlte.

Mit so kleinen Mengen wie 0,6 % Azoäther und 0,9 % TAC wird der gleiche Vernetzungsgrad (76 %) erzielt wie mit so großen Mengen wie 3 % oder 4 % oder 5 % Azoäther allein. Erhöht man die TAC-Menge auf 1,2 %, steigt der erzielte Vernetzungsgrad auf 83 %, der auch mit 5 % Azoäther nicht mehr erzielbar ist. Eine Erhöhung der Triallylcyanurat-Menge in den Kombinationen mit Azoäther führt in diesem Beispiel also zu einem deutlichen Anstieg des Vernetzungsgrades. Alle in Gegenwart des symmetrischen Azoäthers vernetzten Proben waren feinporig verschäumt.

| Azoäther und/oder Vernetzungsverstärker | Vernetzungsgrade |
|---|---|
| a) ohne Zusätze | 5 % |
| b) 0,6 % sym. Azoäther [1,1'-Azo-bis-(1-methoxy-cyclohexan)] | 13 % |
| 1 % sym. Azoäther | 31 % |
| 2 % sym. Azoäther | 64 % |
| 3 % sym. Azoäther | 75 % |
| 4 % sym. Azoäther | 76 % |
| 5 % sym. Azoäther | 76 % |
| c) 0,2 % TAC | 12 % |
| 0,3 % TAC | 15 % |
| 0,6 % TAC | 12 % |
| 0,9 % TAC | 17 % |
| 1,2 % TAC | 19 % |
| d) 0,6 % sym. Azoäther + 0,2 % TAC | 51 % |
| 0,6 % sym. Azoäther + 0,3 % TAC | 58 % |
| 0,6 % sym. Azoäther + 0,6 % TAC | 72 % |
| 0,6 % sym. Azoäther + 0,9 % TAC | 76 % |
| 0,6 % sym. Azoäther + 1,2 % TAC | 83 % |

Beispiel 13

Hochdruckpolyäthylenpulver niederer Dichte (0,918) mit einem Schmelzindex von 70 g/10 Min. wird mittels LUAZO AP als Vernetzungsmittel unter Mitwirkung von TAC als Vernetzungsverstärker 40 Minuten bei 215 °C in Gegenwart der Füllstoffe Ruß, Calciumcarbonat oder Aluminiumsilicat unter Atmosphärendruck vernetzt.

Während die Füllstoffe $CaCO_3$ und Al-Silicat die Vernetzungsgrade erniedrigen, bewirkt Ruß eine leichte Erhöhung des Vernetzungsgrades. Alle in Gegenwart des Azoesters vernetzten Proben waren feinporig verschäumt.

| Füllstoff, Azoester, Vernetzungsverstärker | Vernetzungsgrade |
|---|---|
| ohne Zusätze | 6 % |
| 0,6 % LUAZO AP (ohne Füllstoff) | 37 % |
| 0,3 % TAC (ohne Füllstoff) | 14 % |
| 1,2 % TAC (ohne Füllstoff) | 26 % |
| 0,6 % LUAZO AP + 0,3 % TAC (ohne Füllstoff) | 70 % |
| 0,6 % LUAZO AP + 1,2 % TAC (ohne Füllstoff) | 75 % |
| (A) Mit 3 % Ruß | |
| a) 3 % Ruß | 11 % |
| b) 3 % Ruß + 0,6 LUAZO AP | 55 % |
| c) 3 % Ruß + 0,3 % TAC | 19 % |
| 3 % Ruß + 1,2 % TAC | 28 % |
| d) 3 % Ruß + 0,6 % LUAZO AP + 0,3 % TAC | 76 % |
| 3 % Ruß + 0,6 % LUAZO AP + 1,2 % TAC | 80 % |
| (B) Mit 3 % Calciumcarbonat ($CaCO_3$) | |
| a) 3 % $CaCO_3$ | 8 % |
| b) 3 % $CaCO_3$ + 0,6 % LUAZO AP | 11 % |
| c) 3 % $CaCO_3$ + 0,3 % TAC | 9 % |
| 3 % $CaCO_3$ + 1,2 % TAC | 13 % |
| d) 3 % $CaCO_3$ + 0,6 % LUAZO AP + 0,3 % TAC | 60 % |
| 3 % $CaCO_3$ + 0,6 % LUAZO AP + 1,2 % | 61 % |
| (C) Mit 3 % Aluminiumsilicat (Al-Silicat) | |
| a) 3 % Al-Silicat | 6 % |
| b) 3 % Al-Silicat + 0,6 % LUAZO AP | 12 % |
| c) 3 % Al-Silicat + 0,3 % TAC | 8 % |
| 3 % Al-Silicat + 1,2 % | 10 % |
| d) 3 % Al-Silicat + 0,6 % LUAZO AP + 0,3 % TAC | 32 % |
| 3 % Al-Silicat + 0,6 % LUAZO AP + 1,2 % TAC | 73 % |

Beispiel 14

Polyäthylen-Grieß hoher Dichte (0,950 bis 0,953) mit einem Schmelzindex von 1,7 bis 2,3/10 Min. wird mittels LUAZO AP als Vernetzungsmittel unter Mitwirkung von TAC als Vernetzungsverstärker 40 Minuten bei 220 °C unter Atmosphärendruck vernetzt. Vernetzung und Bestimmung des Vernetzungsgrades wird

wie eingangs beschrieben ausgeführt, jedoch wird die 1-stündige Extraktion mit dem 80-fachen Volumen siedendem Xylol zweimal (statt nur einmal) vorgenommen.

Dieses Beispiel zeigt, daß sicht auch Polyäthylen hoher Dichte mittels einer Kombination aus Azoverbindung + Vernetzungsverstärker vernetzen läßt und dabei gute Vernetzungsgrade ergibt. Alle Proben waren feinporig verschäumt.

| Azoester und Vernetzungsverstärker | Vernetzungsgrade |
|---|---|
| 0,4 % LUAZO AP + 0,2 % TAC | 54 % |
| 0,4 % LUAZO AP + 0,4 % TAC | 66 % |
| 0,4 % LUAZO AP + 0,6 % TAC | 73 % |
| 0,4 % LUAZO AP + 0,8 % TAC | 74 % |
| 0,6 % LUAZO AP + 0,3 % TAC | 54 % |
| 0,6 % LUAZO AP + 0,4 % TAC | 63 % |
| 0,6 % LUAZO AP + 0,6 % TAC | 65 % |
| 0,6 % LUAZO AP + 0,8 % TAC | 68 % |
| 0,6 % LUAZO AP + 1 % TAC | 78 % |
| 0,6 % LUAZO AP + 1,2 % TAC | 79 % |
| 0,8 % LUAZO AP + 0,2 % TAC | 57 % |
| 0,8 % LUAZO AP + 0,4 % TAC | 58 % |
| 0,8 % LUAZO AP + 0,6 % TAC | 60 % |
| 0,8 % LUAZO AP + 0,8 % TAC | 74 % |
| 0,8 % LUAZO AP + 1 % TAC | 77 % |
| 0,8 % LUAZO AP + 1,2 % TAC | 78 % |
| 0,8 % LUAZO AP + 1,6 % TAC | 78 % |
| 1 % LUAZO AP + 0,2 % TAC | 54 % |
| 1 % LUAZO AP + 0,4 % TAC | 55 % |
| 1 % LUAZO AP + 0,5 % TAC | 62 % |
| 1 % LUAZO AP + 0,6 % TAC | 64 % |
| 1 % LUAZO AP + 0,8 % TAC | 74 % |
| 1 % LUAZO AP + 1 % TAC | 76 % |
| 1 % LUAZO AP + 1,2 % TAC | 77 % |
| 1 % LUAZO AP + 1,6 % TAC | 78 % |
| 1 % LUAZO AP + 2 % TAC | 80 % |

Beispiel 15

Ein Gemisch aus gleichen Gewichtsteilen Hochdruckpolyäthylenpulver niederer Dichte (0,918) mit einem Schmelzindex von 70 g/10 Min. und Äthylen-Vinylacetat-Copolymer-Pulver (EVA) von Schmelzindex 25 g/10 Min. (bei 190 °C) mit einem Vinyl-acetat-Anteil von 33 % und einem Äthylen-Anteil von 67 % wird 40 Minuten bei 220 °C mittels LUAZO AP als Vernetzungsmittel unter Mitwirkung von TAC als Vernetzungsverstärker unter Atmosphärendruck vernetzt. Vernetzung und Bestimmung des Vernetzungsgrades werden die eingangs beschrieben ausgeführt, jedoch wird die 1-stündige Extraktion mit dem 80-fachen Volumen siedendem Xylol zweimal (statt nur einmal) vorgenommen.

Dieses Beispiel zeigt, daß das Gemisch Polyäthylen + EVA sich durch Azoester + TAC sogar besser vernetzen läßt (Vernetzungsgrad 70 %) als Polyäthylen alleine (Vernetzungsgrad 62 %). Alle vernetzten Proben [j), k), l)] waren feinporig verschäumt.

| Polymer, Azoester, Vernetzungsverstärker | | Vernetzungsgrade |
|---|---|---|
| a) Polyäthylen, | ohne Zusätze | 4 % |
| b) EVA, | ohne Zusätze | 4 % |
| c) Polyäthylen + EVA, | ohne Zusätze | 5 % |
| d) Polyäthylen | + 0,5 % LUAZO AP | 28 % |
| e) EVA | + 0,5 % LUAZO AP | 24 % |
| f) Polyäthylen + EVA | + 0,5 % LUAZO AP | 10 % |
| g) Polyäthylen | + 1 % TAC | 18 % |
| h) EVA | + 1 % TAC | 10 % |
| i) Polyäthylen + EVA | + 1 % TAC | 21 % |
| j) Polyäthylen | + 0,5 % LUAZO AP + 1 % TAC | 62 % |
| k) EVA | + 0,5 % LUAZO AP + 1 % TAC | 57 % |
| l) Polyäthylen + EVA | + 0,5 % LUAZO AP + 1 % TAC | 70 % |

Beispiel 16

Hochdruckpolyäthylenpulver niederer Dichte (0,918) mit einem Schmelzindex von 70 g/10 Min. wird

40 Minuten bei 215 °C mittels verschiedener Kombinationen aus Azoverbindung (en) + Peroxid (en) als Vernetzungsmittel unter Mitwirkung von einem oder mehreren verschiedenen Vernetzungsverstärkern unter Atmosphärendruck vernetzt.

Dieses Beispiel zeigt, daß auch Kombinationen aus Azoverbindung + Vernetzungsverstärker + Peroxid gute Vernetzungsgrade liefern. Die Proben waren feinporig verschäumt.

| Azoverbindung, Peroxid<br>Vernetzungsverstärker | Vernetzungsgrade |
|---|---|
| a) 0,3 % LUAZO AP + 0,3 % Peroctoat + 0,3 % TAC | 90 % |
| b) 0,3 % LUAZO AP + 0,3 % Perbenzoat + 0,3 % TAC | 73 % |
| c) 0,3 % LUAZO AP + 0,3 % Dicup + 0,3 % TAC | 80 % |
| d) 0,3 % LUAZO AP + 0,3 % LUP. 101 + 0,3 % TAC | 80 % |
| e) 0,3 % LUAZO AP + 0,3 % LUP. 130 + 0,3 % TAC | 76 % |
| f) 0,3 % LUAZO AP + 0,3 % LUP. 231 + 0,3 % TAC | 76 % |
| g) 0,3 % LUAZO AP + 0,3 % LUP. 231 + 0,3 % Butylam-DAC | 77 % |
| h) 0,3 % LUAZO AP + 0,3 % Dicup<br>+ 0,15 % TAC + 0,15 % Diallylmaleinat | 68 % |
| i) 0,3 % LUAZO AP + 0,3 % Dicup<br>+ 0,15 % TAC + 0,15 % IsoTAC | 57 % |
| j) 0,3 % LUAZO AP + 0,3 % LUP. 231<br>+ 0,15 % TAC + 0,15 % Diallylmaleinat | 60 % |
| k) 0,3 % LUAZO AP + 0,3 % LUP. 231<br>+ 0,15 % TAC + 0,15 % IsoTAC | 65 % |
| l) 0,3 % LUAZO AP + 0,3 % LUP. 231<br>+ 0,15 % TAC + 0,15 % DADDC | 62 % |
| m) 0,3 % LUAZO AP<br>+ 0,15 % Peroctoat + 0,15 % LUP. 130<br>+ 0,3 % TAC | 70 % |
| n) 0,3 % LUAZO AP<br>+ 0,15 % LUP. 130 + 0,15 % LUP. 231<br>+ 0,3 % TAC | 76 % |
| o) 0,15 % LUAZO AP + 0,15 % LUAZO VL<br>+ 0,3 % LUP. 231<br>+ 0,3 % TAC | 60 % |
| p) 0,15 % LUAZO AP + 0,15 % asym. Azoester<br>+ 0,15 % Peroctoat + 0,15 LUP. 130<br>+ 0,3 % TAC | 79 % |

## Beispiel 17

Hochdruckpolyäthylenpulver niederer Dichte (0,918) mit einem Schmelzindex von 70 g/10 Min. wird 40 Minuten bei 220 °C mittels 0,6 % des Azoesters LUAZO AP als Vernetzungsmittel unter Mitwirkung von 0,3 % hochmolekularem 1,2-Polybutadienöl (Lithene AH) als Vernetzungsverstärker unter Atmosphärendruck vernetzt. Die in Gegenwart von LUAZO AP vernetzten Proben waren feinporig verschäumt.

| Azoester und/oder<br>Vernetzungsverstärker | Vernetzungsgrade |
|---|---|
| a) ohne Zusätze | 12 % |
| b) 0,6 % LUAZO AP | 30 % |
| c) 0,3 % 1,2-Polybutadienöl | 9 % |
| d) 0,6 % LUAZO AP<br>+ 0,3 % 1,2-Polybutadienöl | 56 % |

## Beispiel 18

Eine PVC-Paste, hergestellt aus 70 % Pasten-PVC vom K-Wert 70 durch Verrühren mit 30 % Dioctylphthalat, wird mit verschiedenen Azoverbindungen und TAC 40 Minuten bei 180 °C und 190 °C unter Atmosphärendruck vernetzt.

a) Vernetzung :

Die zu vernetzende PVC-Paste wird mit dem vernetzend wirkenden Agens homogen vermischt. Die Vernetzung erfolgt wie eingangs beschrieben.

b) Bestimmung des Vernetzungsgrades durch Extraktion :

Das nach dem Abkühlen in Streifen geschnittene vernetzte PVC wird in ein genau eingewogenes Drahtnetz eingepackt und nach abermaligem Wägen von Drahtnetz und PVC 1 Stunde mit siedendem Tetrahydrofuran (85 ml Tetrahydrofuran auf 1 g PVC) in einem 100 ml-Erlenmeyer-Kolben unter Rückfluß extrahiert. Danach wird das Drahtnetz mit dem nicht-extrahierten vernetzten PVC-Anteil mit warmem Tetrahydrofuran nachgewaschen, kurze Zeit bei Raumtemperatur und danach 1 Stunde bei 140 °C im Trockenschrank getrocknet. Anschliessend bestimmt man den Gewichtsverlust, der dem herausgelösten Polymeranteil entspricht, durch nochmaliges Wägen. Aus der Differenz zum Gewicht des Polymeren vor der Extraktion ergibt sich der ungelöste Polymeranteil, dessen Menge, ausgedrückt in % der ursprünglichen Polymer-Gesamtmenge, den Vernetzungsgrad angibt.

Die über 100 % liegenden Vernetzungsgrade erklären sich durch den teilweisen Einbau von Dioctylphthalat in das Polymere bei der Vernetzungsreaktion. Die Proben waren feinporig verschäumt.

c) Ergebnisse der Vernetzung :

| Vernetzungsmittel und Vernetzungsverstärker | Vernetzungsgrade, bezogen auf PVC + DOP + Initiator | Vernetzungsgrade, bezogen auf PVC + Initiator |
|---|---|---|
| (A) Nicht stabilisiertes PVC bei 180 °C | | |
| a) 0,1 % LUAZO AMP + 0,05 % TAC | 75 % | 107 % |
| 0,1 % — + 0,1 % — | 70 % | 100 % |
| 0,1 % — + 0,2 % — | 57 % | 82 % |
| b) 0,2 % LUAZO AMP + 0,05 % TAC | 71 % | 101 % |
| 0,2 % — + 0,1 % — | 76 % | 107 % |
| 0,2 % — + 0,2 % — | 72 % | 102 % |
| (B) Stabilisiertes PVC bei 190 °C | | |
| Stabilisator : 0,17 % Ba/Cd-Stearat<br>0,3 % epoxidiertes Sojaöl (Edenor 81)<br>0,3 % Triphenylphosphit<br>bezogen auf 70 % PVC-Pulver + 30 Dioctylphthalat | | |
| a) 0,2 % LUAZO AP + 0,1 % TAC | 81 % | 115 % |
| b) 0,5 % LUAZO AP + 0,1 % TAC | 71 % | 101 % |

## Beispiel 19

Hochdruckpolyäthylenpulver niederer Dichte (Schmelzindex 70 g/10 Min. ; Dichte 0,918) wird 40 Minuten bei 215 °C mittels Vernetzungsmittelkombinationen, die alle Stearylazidoformiat neben einem Azoester und/oder Peroxid enthalten, unter Mitwirkung von TAC bzw. TAC + Butylam-DAC als Vernetzungsverstärker unter Atmosphärendruck vernetzt.

Dieses Beispiel zeigt, daß in Gegenwart von Stearylazidoformiat ebenso gute Vernetzungsgrade erzielt werden wie in seiner Abwesenheit. Es zeigt ebenfalls, daß Stearylazidoformiat in keiner Kombination stört.

Die LUAZO VL enthaltenden Proben waren feinporig verschäumt.

| Zusätze | Vernetzungsgrade |
|---|---|
| a) 0,3 % LUAZO VL<br>+ 0,3 % TAC | 58 % |
| b) 0,6 % LUAZO VL<br>+ 0,3 % TAC | 78 % |
| c) 0,3 % LUAZO VL<br>+ 0,3 % Stearylazidoformiat<br>+ 0,3 % TAC | 76 % |
| d) 0,3 % LUAZO VL<br>+ 0,3 % Stearylazidoformiat<br>+ 0,15 % TAC<br>+ 0,15 % Butylam-DAC | 78 % |
| e) 0,2 % LUAZO VL<br>+ 0,2 % LUP. 231<br>+ 0,2 % Stearylazidoformiat<br>+ 0,3 % TAC | 73 % |

## Beispiel 20

Fünf verschiedene Arten synthetischen Kautschuks werden 40 Minuten bei 220 °C mittels vier symmetrischer Azoester, eines symmetrischen Azoäthers, eines unsymmetrischen Azoesters und eines unsymmetrischen Azoäthers als Vernetzungsmittel unter Mitwirkung von TAC als Vernetzungsverstärker unter Atmosphärendruck vernetzt. Vernetzungsmittel und Vernetzungsverstärker wurden auf einer 70 °C warmen Walze in den Kautschuk eingearbeitet. Vernetzung und Bestimmung des Vernetzungsgrades werden wie eingangs beschrieben ausgeführt (d. h. 1 g vernetzter Kautschuk wird mit 80 ml siedendem Xylol 1 Stunde extrahiert).

Azoverbindung + TAC bewirken in allen Fällen eine gute Vernetzung, wobei die Vernetzungsgrade erheblich über dem Blindwert (Kautschuk ohne Zusätze erhitzt) liegen. Der AP-Kautschuk Buna AP 201 läßt sich von Azoverbindungen allein nicht vernetzen, erst die Kombination mit einem Vernetzungsverstärker macht eine Vernetzung möglich. Die Azoverbindungen enthaltenen Proben waren feinporig verschäumt.

| Azoverbindung und Triallylcyanurat | Vernetzungsgrade folgender Kautschuke: Buna AP 201 (1) | Buna AP 241 (2) | Buna AP 258 (3) | Buna Hüls 1502 (4) | Buna CB 10 (5) |
|---|---|---|---|---|---|
| a) ohne Zusätze | 17 % | 28 % | 62 % | 88 % | 13 % |
| b) 0,6 % LUAZO AMP +0,3 % TAC | 86 % | 87 % | 87 % | - | 99 % |
| c) 0,6 % LUAZO AP +0,3 % TAC | 79 % | 96 % | 95 % | 98 % | 99 % |
| d) 0,6 % LUAZO VL +0,3 % TAC | - | - | 89 % | 96 % | - |
| e) 0,6 % LUAZO AC +0,3 % TAC | - | 92 % | - | - | 96 % |
| f) 0,6 % sym. Azoäther +0,3 % TAC | - | 94 % | - | - | - |
| g) 0,6 % unsym.Azoester +0,3 % TAC | - | - | 88 % | - | - |
| h) 0,6 % unsym.Azoäther +0,3 % TAC | 81 % | - | - | 95 % | - |
| i) 1 % LUAZO AMP +0,5 % TAC | 82 % | - | - | - | - |

(1) Buna AP 201 = Äthylen-Propylen-Kautschuk
(2) Buna AP 241 = Äthylen-Propylen-Äthylidennorbornen-Kautschuk, sehr schnell
(3) Buna AP 258 = Äthylen-Propylen-Äthylidennorbornen-Kautschuk, extrem schnell
(4) Buna Hüls 1502 = Styrol-Butadien-Kautschuk
(5) Buna CB 10 = Polybutadien-Kautschuk

## Beispiel 21

Hochdruckpolyäthylenpulver niederer Dichte (Schmelzindex 70 g/Min. ; Dichte 0,918) wird mittels 0,6 % LUAZO AP als Vernetzungsmittel unter Mitwirkung von 0,3 % TAC als Vernetzungsverstärker im Vergleich zu 0,6 % LUAZO AP unter Atmosphärendruck (A) 40 Minuten bei verschiedenen Temperaturen und (B) bei 215 °C während unterschiedlicher Zeiten vernetzt.

Teil (A) dieses Beispiels dient der Bestimmung der Anspringtemperatur. Er zeigt, daß die Kombination aus 0,6 % LUAZO AP + 0,3 % TAC um 20 °C tiefer anspringt (bei 200 °C) als 0,6 % LUAZO AP allein (bei 220 °C). Er zeigt außerdem, daß der maximale Vernetzungsgrad der Kombination höher liegt als der des LUAZO AP allein.

Teil (B) dieses Beispiels dient der Bestimmung der Mindestvernetzungszeit. Er zeigt, daß die Kombination aus 0,6 % LUAZO AP + 0,3 % TAC eine um etwa 5 Minuten kürzere Mindestvernetzungszeit (ca. 20 Minuten) benötigt als LUAZO AP allein (ca. 25 Minuten). Er zeigt auch, daß der maximale Vernetzungsgrad der Kombination höher liegt als der des LUAZO AP allein.

Die mit LUAZO AP oder mit der Kombination LUAZO AP + TAC vernetzten Proben waren feinporig verschäumt.

(Siehe Tabelle Seite 19 f.)

Vernetzungsgrade erzielt mittels

| | 0,6 % LUAZO AP | 0,3 % TAC | 0,6 % LUAZO AP + 0,3 % TAC |
|---|---|---|---|
| (A) Vernetzungds-temperaturen : | | | |
| 140 °C | 0 % | 0 % | 0 % |
| 150 °C | 0 % | 0 % | 0 % |
| 160 °C | 0 % | 0 % | 0 % |
| 170 °C | 0 % | 0 % | 0 % |
| 180 °C | 6,9 % | 6,4 % | 7,1 % |
| 190 °C | 5,9 % | 6,6 % | 6,9 % |
| 200 °C | 5,6 % | 7,4 % | 35 % |
| 210 °C | 8,7 % | 12 % | 71 % |
| 220 °C | 32 % | 16 % | 80 % |
| 230 °C | 56 % | 21 % | 77 % |
| 240 °C | 63 % | 23 % | 73 % |
| (B) Vernetzungs-zeiten : | | | |
| 5 Minuten | 3,6 % | 3,2 % | 4,3 % |
| 10 — | 4,1 % | 3,9 % | 4,9 % |
| 15 — | 4,0 % | 4,3 % | 5,1 % |
| 20 — | 6,1 % | 7,1 % | 45 % |
| 25 — | 41 % | 9,6 % | 68 % |
| 30 — | 35 % | 12 % | 73 % |
| 35 — | 40 % | 9,5 % | 68 % |
| 40 — | 58 % | 8,1 % | 66 % |
| 45 — | 39 % | 11 % | 68 % |
| 50 — | 32 % | 11 % | 67 % |
| 55 — | 30 % | 16 % | 83 % |
| 60 — | 30 % | 17 % | 67 % |

## Beispiel 22

Polyäthylengrieß hoher Dichte (0,950-0,953) mit einem Schmelzindex von 1,7 bis 2,3/10 Min. wird mittels LUAZO AMP bzw. des unsymmetrischen Azoäthers 1-tert.-Butylazo-1-methoxy-cyclohexan als Vernetzungsmittel unter Mitwirkung von TAC als Vernetzungsverstärker im Monsanto-Rheometer bei 195 °C bis zum Erreichen des maximalen Vernetzungsgrades vernetzt (ca. 2 Stunden). In der nachstehenden Tabelle werden die Meßwerte erläutert :

$T_5$ : Scorchzeit « Anvulkanisationszeit » Zeit in Minuten bis zum Erreichen von 5 % der maximalen Vernetzung.

$T_{90}$ : Zeit in Minuten bis zum Erreichen von 90 % der maximalen Vernetzung.

$TM_{50}$ : Bei der maximalen Vernetzung aufgewendete Torsionskraft der oszillierenden Scheibe des Monsanto-Rheometers bei der Empfindlichkeitseinstellung 50. Die Höhe des $TM_{50}$-Wertes macht eine Aussage über den Vernetzungsgrad des Polyäthylens : die $TM_{50}$-Werte sind relative Größen.

Da die Eigenviskosität der 195° warmen Polyäthylenmischung einen $TM_{50}$-Wert von 14 hat, entspricht ein solcher Wert von 14 einem unvernetzten Polyäthylen.

Dieses Beispiel zeigt, daß die Viskosität (als indirektes Maß des Vernetzungsgrades) in Gegenwart von TAC höher ist und außerdem blasenfrei vernetzte Produkte erhalten werden.

| Azoverbindung, Vernetzungsverstärker | $T_5$ Min. | $T_{90}$ Min. | $TM_{50}$ | Aussehen des vernetzten Polyäthylens |
|---|---|---|---|---|
| a) Unvernetztes Polyäthylen am Beginn der Vernetzung | — | — | 14 | — |
| b) 0,6 % LUAZO AMP | 3,5 | 54 | 52 | verschäumt |
| c) 0,6 % unsym. Azoäther | 2,5 | 43 | 65 | verschäumt |
| d) 0,6 % LUAZO AMP + 0,6 % TAC | 3,8 | 62,5 | 59 | blasenfrei |
| e) 0,6 % unsym. Azoäther + 0,6 % TAC | 2,5 | 40,5 | 67 | blasenfrei |

Beispiel 23

Polypropylenpulver (Schmelzindex 0,6 g/10 Min. bei 230 °C und 21,18 N Belastung) wird 40 Minuten mittels (A) verschiedener Mengen LUAZO AMP unter Mitwirkung von 5 % Triallyltrimellitat (TATM) als Vernetzungsverstärker bei 200 °C und (B) mittels 5 % TATM + 1 % LUAZO AMP bei unterschiedlichen Temperaturen (175° bis 205 °C) unter Stickstoff vernetzt. Die Bestimmung des Vernetzungsgrades wird wie eingangs beschrieben ausgeführt, d. h. durch 1-stündige Extraktion mit dem 80-fachen Volumen siedendem Xylol unter Rückfluß.

Aus der Versuchsreihe (A) ist zu ersehen, daß Vernetzung nur bei Einsatz von Mengen zwischen 0,4 % bis etwa 2,5 % LUAZO AMP erfolgt, und aus der Versuchsreihe (B), daß über 200 °C keine Vernetzung mehr eintritt

| Azoester, Vernetzungsverstärker | Vernetzungsgrade |
|---|---|
| (A) Bei 200 °C mit verschiedenen Mengen LUAZO AMP: | |
| a) ohne Zusätze | 0,1 % |
| b) 0,09 % LUAZO AMP | 0,1 % |
| 0,11 % LUAZO AMP | 0,0 % |
| 0,5 % LUAZO AMP | 0,0 % |
| 1 % LUAZO AMP | 0,0 % |
| 2 % LUAZO AMP | 0,0 % |
| 3 % LUAZO AMP | 0,0 % |
| 4 % LUAZO AMP | 0,0 % |
| 5 % LUAZO AMP | 0,0 % |
| c) 5 % TATM | |
| + 0,09 % LUAZO AMP | 0,3 % |
| d) 5 % TATM | |
| + 0,11 % LUAZO AMP | |
| (äquivalent 0,05 % LUP. 101) | 1 % |
| e) 5 % TATM | |
| + 0,2 % LUAZO AMP | 8 % |
| f) 5 % TATM | |
| + 0,3 % LUAZO AMP | 14 % |
| g) 5 % TATM | |
| + 0,4 % LUAZO AMP | 60 % |
| h) 5 % TATM | |
| + 0,5 % LUAZO AMP | 67 % |
| i) 5 % TATM | |
| + 0,75 % LUAZO AMP | 66 % |
| j) 5 % TATM | |
| + 1 % LUAZO AMP | 67 % |
| k) 5 % TATM | |
| + 2 % LUAZO AMP | 48 % |
| l) 5 % TATM | |
| + 3 % LUAZO AMP | 24 % |
| m) 5 % TATM | |
| + 4 % LUAZO AMP | 5 % |
| n) 5 % TATM | |
| + 5 % LUAZO AMP | 0,2 % |
| (B) Bei unterschiedlichen Temperaturen (175° bis 205 °C) mit 1 % LUAZO AMP: | |
| a) 5 % TATM | |
| + 1 % LUAZO AMP (bei 175 °C) | 78 % |
| b) 5 % TATM | |
| + 1 % LUAZO AMP (bei 180 °C) | 78 % |
| c) 5 % TATM | |
| + 1 % LUAZO AMP (bei 185 °C) | 75 % |
| d) 5 % TATM | |
| + 1 % LUAZO AMP (bei 190 °C) | 74 % |
| e) 5 % TATM | |
| + 1 % LUAZO AMP (bei 200 °C) | 67 % |
| f) 5 % TATM | |
| + 1 % LUAZO AMP (bei 205 °C) | 3 % |

Beispiel 24

Polypropylenpulver (Schmelzindex 0,6 g/10 Min. bei 230 °C und 2,16 kp Belastung) wird mittels 1 % LUAZO AMP unter Mitwirkung von 5 % verschiedener Vernetzungsverstärker 40 Minuten bei 180 °C unter Stickstoff in Ab- und Anwesenheit von 0,1 % des Antioxidans O,O'-Di-tert.-butyl-p-kresol (TBK) vernetzt. Die Bestimmung des Vernetzungsgrades wird wie eingangs beschrieben ausgeführt, d. h. durch 1-stündige Extraktion mit dem 80-fachen Volumen siedendem Xylol unter Rückfluß.

Dieses Beispiel zeigt, daß außer Triallyltrimellitat auch andere (aber nicht alle) Vernetzungsverstärker zur Vernetzung von Polypropylen geeignet sind, und zwar in Abwesenheit und in Anwesenheit eines Antioxidans.

| Azoester, Vernetzungsverstärker | Vernetzungscrade |
|---|---|
| (A) Mit 1 % LUAZO AMP + 5 % verschiedener Vernetzungsverstärker : | |
| a) 5 % TATM | 78 % |
| b) 5 % TAC | 71 % |
| c) 5 % TAPA | 72 % |
| d) 5 % Diallylglutarat | 0 % |
| e) 5 % DilsoAC | 49 % |
| f) 5 % DAP | 7 % |
| g) 5 % TRIM | 65 % |
| h) 5 % EDMA | 63 % |
| i) 5 % m-PBMI | 67 % |
| (B) Mit 1 % LUAZO AMP + 5 % verschiedener Vernetzungsverstärker + 0,1 % TBK-Antioxidans (Ant.) : | |
| a) 5 % TATM + Ant. | 18 % |
| b) 5 % TAC + Ant. | 79 % |
| c) 5 % TAPA + Ant. | 70 % |
| d) 5 % TRIM + Ant. | 75 % |
| e) 5 % EDMA + Ant. | 76 % |
| f) 5 % m-PBMI + Ant. | 62 % |

Beispiel 25

In diesem Beispiel wird als Radikalbildner der symmetrische Azoester LUAZO AMP in sehr kleinen Mengen verwendet.

Hochdruckpolyäthylenpulver niederer Dichte (Schmelzindex 70 g/10 Min. ; Dichte 0,918) wird 40 Minuten bei 200 °C mittels einer Kombination aus sehr kleinen Mengen des symmetrischen Azoesters LUAZO AMP als Radikalbildner und TAC als Vernetzungsverstärker unter Atmosphärendruck vernetzt.

Dieses Beispiel zeigt, daß in Gegenwart eines Vernetzungsverstärkers auch sehr kleine Mengen Azoverbindung gute Vernetzungsgrade bewirken. Bemerkenswert ist die Tatsache, daß in Gegenwart kleinerer Mengen TAC (0,5 %) eine bessere Vernetzung erfolgt (77 % bzw. 81 %) als in Gegenwart größerer Mengen (1 % oder 2 %) TAC.

Das vernetzte Produkt war nicht verschäumt.

| Zusätze | Vernetzungsgrade |
|---|---|
| a) ohne Zusätze | 6,5 % |
| b) 0,01 % LUAZO AMP | 6,0 % |
| 0,02 % LUAZO AMP | 6,3 % |
| 0,03 % LUAZO AMP | 7,1 % |
| 0,04 % LUAZO AMP | 8,0 % |
| 0,043 % LUAZO AMP | 8,5 % |
| 0,05 % LUAZO AMP | 9,9 % |
| 0,1 % LUAZO AMP | 48 % |
| 0,2 % LUAZO AMP | 61 % |
| 0,5 % LUAZO AMP | 67 % |
| 1 % LUAZO AMP | 75 % |
| 2 % LUAZO AMP | 77 % |
| c) 0,1 % TAC | 10 % |
| 0,5 % TAC | 22 % |
| 1 % TAC | 25 % |
| 2 % TAC | 43 % |
| d) 0,1 % TAC + 0,05 % LUAZO AMP | 41 % |

Fortsetzung

| Zusätze | Vernetzungsgrade |
|---|---|
| e) 0,5 % TAC + 0,043 % LUAZO AMP | 77 % |
| 0,5 % TAC + 0,05 % LUAZO AMP | 81 % |
| f) 1 % TAC + 0,02 % LUAZO AMP | 46 % |
| 1 % TAC + 0,043 % LUAZO AMP | 70 % |
| 1 % TAC + 0,05 % LUAZO AMP | 73 % |
| g) 2 % TAC + 0,05 % LUAZO AMP | 74 % |

Beispiel 26

In diesem Beispiel werden als Radikalbildner ein unsymmetrischer Azoester und ein unsymmetrischer Azoäther in sehr kleinen Mengen eingesetzt.

Hochdruckpolyäthylenpulver niederer Dichte (Schmelzindex 70 g/10 Min. ; Dichte 0,918) wird 40 Minuten bei 220 °C mittels einer Kombination aus TAC als Vernetzungsverstärker und sehr kleinen Mengen des unsymmetrischen Azoesters 1-tert.-Butylazo-1-acetoxy-cyclohexan oder des unsymmetrischen Azoäthers 1-tert.-Butylazo-1-methoxy-cyclohexan unter Atmosphärendruck vernetzt.

Dieses Beispiel zeigt, daß der Vernetzungsverstärker TAC durch sehr kleine Mengen unsymmetrischer Azoverbindungen ebenso gut aktiviert wird wie durch den symmetrischen Azoester LUAZO AMP des vorhergehenden Beispiels 25.

Das vernetzte Produkt war nicht verschäumt.

| Zusätze | Vernetzungsgrade |
|---|---|
| a) ohne Zusätze | 10 % |
| b) 0,5 % TAC | 26 % |
| 1 % TAC | 36 % |
| (A) Mit unsym. Azoester : | |
| a) 0,05 % unsym. Azoester | 11 % |
| 0,1 % unsym. Azoester | 10 % |
| 0,2 % unsym. Azoester | 13 % |
| 0,5 % unsym. Azoester | 10 % |
| 1 % unsym. Azoester | 63 % |
| 2 % unsym. Azoester | 71 % |
| 3 % unsym. Azoester | 83 % |
| b) 0,5 % TAC + 0,05 % unsym. Azoester | 31 % |
| c) 1 % TAC + 0,05 % unsym. Azoester | 51 % |
| 1 % TAC + 0,1 % unsym. Azoester | 78 % |
| 1 % TAC + 0,2 % unsym. Azoester | 77 % |
| (B) Mit unsym. Azoäther : | |
| a) 0,05 % unsym. Azoäther | 12 % |
| 0,1 % unsym. Azoäther | 17 % |
| 0,2 % unsym. Azoäther | 39 % |
| 0,5 % unsym. Azoäther | 79 % |
| 1 % unsym. Azoäther | 78 % |
| 2 % unsym. Azoäther | 71 % |
| 3 % unsym. Azoäther | 70 % |
| b) 0,5 % TAC + 0,05 % unsym. Azoäther | 80 % |
| c) 1 % TAC + 0,05 % unsym. Azoäther | 73 % |
| 1 % TAC + 0,1 % unsym. Azoäther | 74 % |
| 1 % TAC + 0,2 % unsym. Azoäther | 70 % |

Beispiel 27

In diesem Beispiel werden als Radikalbildner ein symmetrischer Azoäther und vier symmetrische Azoester in sehr kleinen Mengen bei unterschiedlichen Temperaturen eingesetzt.

Hochdruckpolyäthylenpulver niederer Dichte (Schmelzindex 70 g/10 Min. ; Dichte 0,918) wird 40 Minuten bei 190 °C bzw. 200 °C bzw. 210 °C bzw. 220 °C mittels Kombinationen aus TAC als Vernetzungsverstärker und sehr kleinen Mengen der nachstehend genannten symmetrischen Azoverbindungen (Azoäther und Azoester) bei Atmosphärendruck vernetzt.

Dieses Beispiel zeigt, daß auch symmetrische Azoäther und Azoester bei Anwendung sehr kleiner Mengen in der Lage sind, Vernetzungsverstärker zu aktivieren und sehr gute Vernetzungsgrade zu liefern, die diejenigen von 2 % bis 5 % der Azoverbindungen allein erreichen oder übertreffen.

Das vernetzte Produkt war nicht verschäumt.

| Zusätze | Vernetzungsgrade |
|---|---|
| (A) Bei 190 °C [(mit 1,1'-Azo-bis-(1-methoxy-cyclohexan)] : | |
| a) ohne Zusätze | 6 % |
| b) 0,5 % TAC | 11 % |
| 1 % TAC | 18 % |
| c) 0,05 % sym. Azoäther | 9 % |
| d) 1 % TAC + 0,05 % sym. Azoäther | 76 % |
| (B) Bei 190 °C [mit 2,2'-Azo-bis-(2-acetoxy-4-methyl-pentan)] : | |
| a) ohne Zusätze | 6 % |
| b) 0,5 % TAC | 11 % |
| 1 % TAC | 18 % |
| c) 0,05 % LUAZO AMP (symmetrischer Azoester) | 7 % |
| d) 0,5 % TAC + 0,05 % LUAZO AMP | 48 % |
| 1 % + 0,05 % LUAZO AMP | 58 % |
| (C) Bei 200 °C [mit 2,2'-Azo-bis-(2-acetoxy-4-methyl-pentan)] : | |
| a) ohne Zusätze | 6,5 % |
| b) 0,5 % TAC | 22 % |
| c) 0,05 % LUAZO AMP | 8 % |
| 0,1 % LUAZO AMP | 48 % |
| 0,2 % LUAZO AMP | 61 % |
| 0,5 % LUAZO AMP | 67 % |
| 1 % LUAZO AMP | 75 % |
| 2 % LUAZO AMP | 77 % |
| d) 0,5 % TAC + 0,05 % LUAZO AMP | 81 % |
| (D) Bei 210 °C [mit 2,2'-Azo-bis-(2-acetoxypropan)] : | |
| a) ohne Zusätze | 9 % |
| b) 0,5 % TAC | 28 % |
| 1 % TAC | 35 % |
| c) 0,05 % LUAZO AP (symmetrischer Azoester) | 8 % |
| 0,1 % LUAZO AP (symmetrischer Azoester) | 9 % |
| 0,2 % LUAZO AP (symmetrischer Azoester) | 9 % |
| 0,5 % LUAZO AP (symmetrischer Azoester) | 11 % |
| 1 % LUAZO AP (symmetrischer Azoester) | 16 % |
| 2 % LUAZO AP (symmetrischer Azoester) | 70 % |
| d) 1 % TAC + 0,05 % LUACO AP | 48 % |
| 1 % TAC + 0,1 % LUACO AP | 70 % |
| (E) Bei 210 °C [mit 2,2'-Azo-bis-(2-acetoxybutan)] : | |
| a) ohne Zusätze | 9 % |
| b) 0,5 % TAC | 28 % |
| 1 % TAC | 35 % |
| c) 0,05 % LUAZO ABA (symmetrischer Azoester) | 8 % |
| 0,1 % LUAZO ABA (symmetrischer Azoester) | 9 % |
| 0,2 % LUAZO ABA (symmetrischer Azoester) | 9 % |
| 0,5 % LUAZO ABA (symmetrischer Azoester) | 9 % |
| 1 % LUAZO ABA (symmetrischer Azoester) | 59 % |
| 2 % LUAZO ABA (symmetrischer Azoester) | 72 % |
| d) 0,5 % TAC + 0,05 % LUAZO ABA | 42 % |
| 1 % TAC + 0,05 % LUAZO ABA | 71 % |
| (F) Bei 220 °C [mit 1,1'-Azo-bis-(1-acetoxy-cyclohexan)] : | |
| a) ohne Zusätze | 10 % |
| b) 0,5 % TAC | 26 % |
| 1 % TAC | 36 % |
| c) 0,05 % LUAZO AC (symmetrischer Azoester) | 10 % |
| 0,1 % LUAZO AC (symmetrischer Azoester) | 11 % |
| 0,2 % LUAZO AC (symmetrischer Azoester) | 10 % |
| 0,5 % LUAZO AC (symmetrischer Azoester) | 11 % |
| 1 % LUAZO AC (symmetrischer Azoester) | 11 % |
| 3 % LUACO AC (symmetrischer Azoester) | 66 % |
| 5 % LUACO AZO (symmetrischer Azoester) | 72 % |
| d) 1 % TAC + 0,05 % LUAZO AC | 45 % |
| 1 % TAC + 0,1 % LUAZO AC | 67 % |

Beispiel 28

Hochdruckpolyäthylenpulver niederer Dichte (Schmelzindex 70 g/10 Min. ; Dichte 0,918) wird 40

Minuten bei 215 °C mittels LUAZO AP und LUAZO VL als Vernetzungsmittel unter Mitwirkung von TAC als Vernetzungsverstärker in Gegenwart der Antioxidantien TBK-Antioxidans (O,O'-Di-tert.-butyl-p-kresol) und PADAT-Antioxidans (2-(p-Phenylamino-anilino)-4,6-diallyloxy-s-triazin) unter Atmosphärendruck vernetzt.

Dieses Beispiel zeigt, daß bei der Vernetzung von Polyäthylen auch in Gegenwart von Antioxidantien gute Vernetzungsgrade erzielt werden.

Alle in Gegenwart von Azoestern vernetzten Proben waren feinporig verschäumt.

| Zusätze | Vernetzungsgrade |
|---|---|
| a) 0,3 % TAC | 16 % |
| b) 0,6 % LUAZO AP | 33 % |
| c) 0,6 % LUAZO AP + 0,3 % TAC | 73 % |
| d) 0,6 % LUAZO AP + 0,3 % TAC + 0,1 % TBK-Ant. | 51 % |
| e) 0,6 % LUAZO AP + 0,3 % TAC + 0,1 % PADAT-Ant. | 80 % |
| f) 0,6 % LUAZO AP + 0,3 % TAC + 0,3 % PADAT-Ant. | 66 % |
| g) 0,6 % LUAZO VL | 30 % |
| h) 0,6 % LUAZO VL + 0,3 % TAC | 77 % |
| i) 0,6 % LUAZO VL + 0,3 % TAC + 0,1 % TBK-Ant. | 56 % |
| j) 0,6 % LUAZO VL + 0,3 TAC + 0,1 % PADAT-Ant. | 75 % |
| k) 0,6 % LUAZO VL + 0,3 % TAC + 0,3 PADAT-Ant. | 74 % |

**Patentansprüche**

1. Verfahren zum Vernetzen und gegebenenfalls Verschäumen von natürlichen oder synthetischen Homo-oder Copolymeren mit $—CH_2$- und/oder $—\underset{|}{C}H$-Gruppen sowie von Mischungen aus zwei oder mehreren dieser Homo- und/oder Copolymeren unter Verwendung von Azoestern und/oder Azoäthern der allgemeinen Formel III und/oder IV

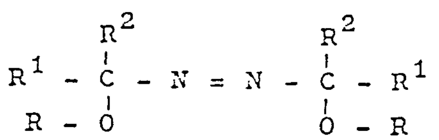

(III)

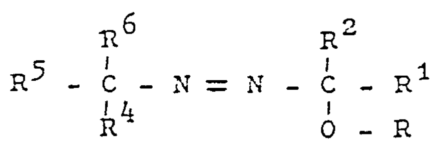

(IV)

worin bedeuten

R = $C_{1-11}$ -Alkyl, $C_{5-6}$ -Cycloalkyl, Phenyl, Phenyl- $C_{1-10}$ -alkyl oder $R^3$-CO- ($R^3$ = H, $C_{1-10}$ -Alkyl, $C_{5-6}$ -Cycloalkyl, Phenyl, Phenyl-$C_{1-10}$ -alkyl), wobei diese Reste Methylgruppen oder $C_{2-10}$- Alkylketten als Substituenten enthalten können ;

$R^1$ und $R^2$, die gleich oder verschieden sein können, = $C_{1-10}$ -Alkyl, $C_{5-6}$ -Cycloalkyl, Phenyl, Phenyl-$C_{1-10}$-alkyl, wobei diese Reste Methyl- oder $C_{2-10}$-Alkylketten als Substituenten enthalten können ;

$R^1R^2C$ zusammen = $C_{5-6}$-Cycloalkyl, der Methyl- oder $C_{2-10}$-Alkylsubstituenten enthalten kann ;

$RR^1$ miteinander = $—CO—CH_2—CH_2—$ oder $—CO—CH_2—CH_2—CH_2—$, die Methyl- oder $C_{2-10}$-Alkylsubstituenten enthalten können ;

$R^4$ und $R^5$ und $R^6$, die gleich oder verschieden sein können, = $CH_3$, $C_{2-10}$-Alkyl, $C_{5-6}$-Cycloalkyl, Phenyl, Phenyl-$C_{1-10}$-alkyl, wobei diese Reste Methyl- oder $C_{2-10}$-Alkylketten als Substituenten enthalten können ;

$R^5R^6C$ zusammen = $C_{5-6}$-Cycloalkyl, der Methyl- oder $C_{2-10}$-Alkylsubstituenten enthalten kann, wobei die Reste R, $R^1$, $R^2$, $R^3$, $R^1R^2C$ und $RR^1$ in der allgemeinen Formel III auf der linken und rechten Seite des Moleküls gleich oder verschieden sein können, als radikalbildende Vernetzungsmittel, unter Unterdruck, Atmosphärendruck oder Überdruck, dadurch gekennzeichnet, dass die Vernetzung mit insgesamt 0,02 bis 1,5 Gewichts-% der Azoester und/oder Azoäther in Kombination mit insgesamt 0,05 bis 10 Gewichts-% eines oder mehrerer Vernetzungsverstärker mit mindestens zwei reaktionsfähigen (polymerisierbaren) C-C-Doppel- oder C-C-Dreifachbindungen im Molekül bei Temperaturen von oberhalb 150 °C bis zur oberen Grenze der thermischen Belastbarkeit der zu vernetzenden Homo- und/oder Copolymeren durchgeführt wird, wobei sich die Prozentangaben auf das Gewicht des Homo- und/oder Copolymeren beziehen.

2. Verfahren nach Anspruch 1, dadurch gekennzeichnet, dass Kombinationen aus einem oder mehreren Azoestern und/oder Azoäthern mit einem oder mehreren anderen radikalischen Vernetzungsmitteln angewendet werden.

3. Verfahren nach Anspruch 2, dadurch gekennzeichnet, dass als andere radikalische Vernetzungsvermittel organische Peroxide mit Ausnahme von Hydroxyperoxiden und Persäuren angewendet werden.

4. Verfahren nach Anspruch 2, dadurch gekennzeichnet, dass als andere radikalische Vernetzungsmittel organische Azide angewendet werden.

5. Verfahren nach Anspruch 1, 2, 3 oder 4, dadurch gekennzeichnet, dass zusätzlich Verschäumungsmittel angewendet werden.

6. Verfahren nach einem der Ansprüche 1 bis 5, dadurch gekennzeichnet, dass es in Anwesenheit von Füllstoffen durchgeführt wird.

7. Verfahren nach einem der Ansprüche 1 bis 6, dadurch gekennzeichnet, dass es in Anwesenheit von Antioxidantien durchgeführt wird.

**Claims**

1. A process for crosslinking and optionally foaming natural or synthetic homo- or copolymers containing $—CH_2—$ and/or —CH— groups, and mixtures of two or more of said homo- and/or copolymers, with the use of azo esters and/or azo ethers of the general formula III and/or IV

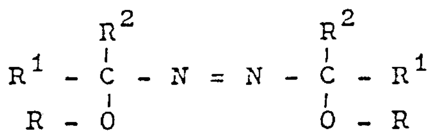

(III)

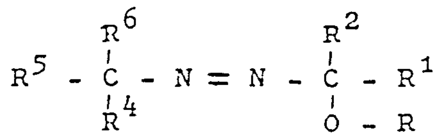

(IV)

wherein

R = $C_{1-11}$ alkyl, $C_{5-6}$ cycloalkyl, phenyl, phenyl-$C_{1-10}$ alkyl, or $R^3—CO—$ ($R^3$ = H, $C_{1-10}$ alkyl, $C_{5-6}$ cycloalkyl, phenyl, phenyl-$C_{1-10}$ alkyl), said radicals optionally containing methyl groups or $C_{2-10}$ alkyl chains as substituents ;

$R^1$ and $R^2$, which may be the same or different, stand for $C_{1-10}$ alkyl, $C_{5-6}$ cycloalkyl, phenyl, phenyl-$C_{1-10}$ alkyl, said radicals optionally containing methyl or $C_{2-10}$ alkyl chains as substituents ;

$R^1R^2C$ together = $C_{5-6}$ cycloalkyl optionally containing methyl or $C_{2-10}$ alkyl substituents ;

$RR^1$ together = $—CO—CH_2—CH_2—$ or $—CO—CH_2—CH_2—CH_2—$ optionally containing methyl or $C_{2-10}$ alkyl substituents ;

$R^4$ and $R^5$ and $R^6$, which may be the same or different, stand for $—CH_3$, $C_{2-10}$ alkyl, $C_{5-6}$ cycloalkyl, phenyl, phenyl-$C_{1-10}$ alkyl, said radicals optionally containing methyl or $C_{2-10}$ alkyl chains as substituents ;

$R^5R^6C$ together = $C_{5-6}$ cycloalkyl optionally containing $C_{2-10}$ alkyl substituents ;

and the radicals R, $R^1$, $R^2$, $R^3$, $R^1R^2C$ and $RR^1$ in the general formula III may be the same or different on the left-hand and the right-hand side of the molecule, as radical-forming crosslinking agents, at subatmospheric, atmospheric, or superatmospheric pressure, characterized in that crosslinkage is effected with a total of 0.02 to 1.5 % by weight of the azo esters and/or azo ethers in combination with a total of 0.05 to 10 % by weight of one or more crosslinking promoters containing at least two reactive (polymerizable) C-C double or C-C triple bonds in the molecule, at temperatures from above 150 °C to the upper limit of the thermal stability of the homo- and/or copolymers to be crosslinked, the percentages being by weight of the homo- and/or copolymer.

2. Process according to claim 1, characterized in that combinations of one or more azo esters and/or azo ethers with one or more other radical-forming crosslinking agents are used.

3. Process according to claim 2, characterized in that organic peroxides, with the exception of hydroxyperoxides and peracids, are used as other radical-forming crosslinking agents.

4. Process according to claim 2, characterized in that organic azides are employed as other radical-forming crosslinking agents.

5. Process according to claims 1, 2, 3 or 4, characterized in that foaming agents are additionally employed.

6. Process according to one of claims 1 to 5, characterized in that it is carried out in the presence of fillers.

7. Process according to one of claims 1 to 6, characterized in that it is carried out in the presence of antioxidants.

**Revendications**

1. Procédé de réticulation et le cas échéant de moussage d'homopolymères ou de copolymères naturels ou synthétiques porteurs de groupes $—CH_2—$ et/ou —CH— ainsi que de mélanges de deux ou plus de deux de ces homopolymères et/ou copolymères, en utilisant des azoesters et/ou des azoéthers de formule générale III et/ou IV

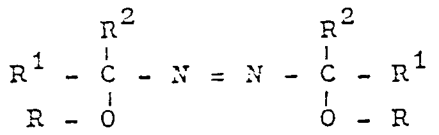

(III)

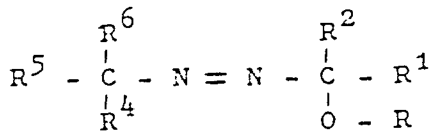

(IV)

où

R représente un groupe alkyle en $C_1$ à $C_{11}$, cycloalkyle en $C_5$ ou $C_6$, phényle, phényl-(alkyle en $C_1$ à $C_{10}$) ou un groupe $R^3$—CO— ($R^3$ = H, alkyle en $C_1$ à $C_{10}$, cycloalkyle en $C_5$ ou $C_6$, phényle, phényl-(alkyle en $C_1$ à $C_{10}$)), ces restes pouvant contenir comme substituants des groupes méthyle ou des chaînes alkyliques en $C_2$ à $C_{10}$ ;

$R^1$ et $R^2$, qui peuvent être identiques ou différents, représentent un groupe alkyle en $C_1$ à $C_{10}$, cycloalkyle en $C_5$ ou $C_6$, phényle, phényl-(alkyle en $C_1$ à $C_{10}$) ces restes pouvant contenir contre substituants des groupes méthyle ou des chaînes alkyliques en $C_2$ à $C_{10}$ ;

$R^1R^2C$ forment ensemble un groupe cycloalkyle en $C_5$ ou $C_6$ qui peut contenir des substituants méthyle ou alkyle en $C_2$ ou $C_{10}$ ;

$RR^1$ forment ensemble un groupe —CO—$CH_2$—$CH_2$— ou —CO—$CH_2$—$CH_2$—$CH_2$—, qui peut contenir des substituants méthyle ou alkyle en $C_2$ à $C_{10}$ ;

$R^4$ et $R^5$ et $R^6$, qui peuvent être identiques ou différents, représentent des restes $CH_3$, alkyle en $C_2$ à $C_{10}$, cycloalkyle en $C_5$ ou $C_6$, phényle, phényl-(alkyle en $C_1$ à $C_{10}$), ces restes pouvant contenir des groupes méthyle ou des chaînes alkyle en $C_2$ à $C_{10}$ ;

$R^5R^6C$ forment conjointement un groupe cycloalkyle en $C_5$ ou $C_6$ qui peut comporter des substituants méthyle ou alkyle en $C_2$ à $C_{10}$,

ces restes R, $R^1$, $R^2$, $R^3$, $R^1R^2C$ et $RR^1$ dans la formule générale III du côté gauche et du côté droit de la molécule pouvant être identiques ou différents, comme agents de réticulation engendrant des radicaux, à une pression inférieure, égale ou supérieure à la pression atmosphérique, caractérisé en ce que la réticulation est effectuée avec au total 0,02 à 1,5 % en poids des azoesters et/ou des azoéthers en association avec au total 0,05 à 10 % en poids d'un ou plusieurs activateurs de réticulation présentant au moins deux doubles liaisons ou triples liaisons carbone à carbone (polymérisables) réactives dans la molécule, à des températures allant de plus de 150 °C à la limite supérieure d'aptitude à la charge thermique des homopolymères et/ou copolymères à réticuler, les indications de pourcentage se rapportant au poids de l'homopolymère et/ou du copolymère.

2. Procédé suivant la revendication 1, caractérisé en ce qu'on utilise des associations d'un ou plusieurs azoesters et/ou azoéthers avec un ou plusieurs autres agents radicalaires de réticulation.

3. Procédé suivant la revendication 2, caractérisé en ce qu'on utilise comme autres agents radicalaires de réticulation des peroxydes organiques à l'exception d'hydroperoxydes et de peracides.

4. Procédé suivant la revendication 2, caractérisé en ce qu'on utilise des azides organiques comme autres agents radicalaires de réticulation.

5. Procédé suivant la revendication 1, 2, 3 ou 4, caractérisé en ce qu'on utilise en outre des agents moussants.

6. Procédé suivant l'une des revendications 1 à 5, caractérisé en ce qu'il est mis en œuvre en présence de charges.

7. Procédé suivant l'une des revendications 1 à 6, caractérisé en ce qu'il est mis en œuvre en présence d'anti-oxydants.